# EUROPÄISCHE PATENTSCHRIFT

(11) **EP 1 081 196 B1**
(45) Veröffentlichungstag und Bekanntmachung des Hinweises auf die Patenterteilung: **24.07.2002**
(21) Anmeldenummer: 00810746.8
(22) Anmeldetag: 22.08.2000
(51) Int. Cl.: C09B 67/22, C09B 62/06, D06P 1/382, D06P 3/24

(54) **Verfahren zum Färben oder Bedrucken von polyamidhaltigen Materialien**
Process for colouring and printing polyamid containing materials
Procédé de teinture et d'impression de matières contenant de polyamide

(30) Priorität: 30.08.1999 EP 99810780
(43) Veröffentlichungstag der Anmeldung: 07.03.2001
(73) Patentinhaber: Ciba Specialty Chemicals Holding Inc., 4057 Basel (CH)
(72) Erfinder: Adam, Jean-Marie, 68300 Rosenau (FR); Bacher, Jean-Pierre, 68220 Buschwiller (FR)

(56) Entgegenhaltungen:
- EP-A- 0 708 151
- EP-A- 0 808 940
- FR-A- 1 228 528

## Beschreibung

Die vorliegende Erfindung betrifft ein Verfahren zum Trichromie-Färben oder -Bedrucken von natürlichen und synthetischen Polyamidfasermaterialien.

Die der vorliegenden Erfindung zugrundeliegende Aufgabe war es, ein Verfahren zum Färben oder Bedrucken von natürlichen und synthetischen Polyamidfasermaterialien mit zur Kombination nach dem Trichromie-Prinzip geeigneten Farbstoffen zu finden.

Das Färben oder Bedrucken von natürlichen und synthetischen Polyamidfasermaterialien nach dem Trichromie-Prinzip ist bekannt. Es hat sich jedoch gezeigt, dass die resultierenden Färbungen den höchsten Ansprüchen, insbesondere im Bezug auf die Brillanz, Nass- und Lichtechtheiten nicht immer vollauf genügen. Es besteht daher Bedarf nach neuen Farbstoffen welche in einer Trichromie-Färbetechnik einsetzbar sind und Färbungen oder Drucke ergeben welche sehr gute Nass- und/oder Lichtechtheiten zeigen.

Es wurde nun gefunden, dass man diese Aufgabe erfindungsgemäss durch das nachfolgend beschriebene Verfahren lösen kann. Die so erhaltenen Färbungen genügen den gestellten Aufgaben. Insbesondere zeichnen sich die erhaltenen Färbungen durch einen gleichmässigen Farbaufbau bei gleichzeitiger Nuancenkonstanz in verschiedenen Konzentrationen und eine gute Kombinierbarkeit aus, sowie durch gute Nassechtheiten und gute Lichtechtheit.

Gegenstand der vorliegenden Erfindung ist ein Verfahren zum Trichromie-Färben oder -Bedrucken von natürlichem oder synthetischem Polyamidfasermaterial, welches dadurch gekennzeichnet ist, dass man
mindestens einen blaufärbenden Farbstoff der Formel 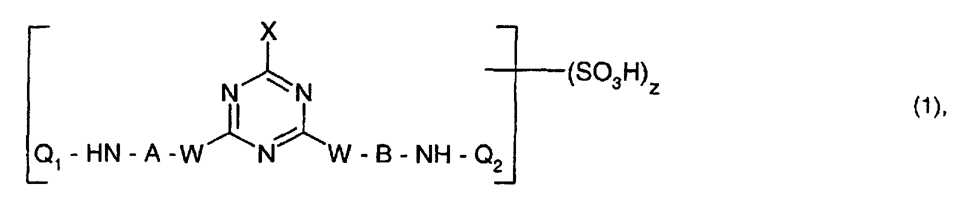 worin
X Halogen, Hydroxy, C₁-C₄-Alkoxy, S-C₁-C₄-Alkyl, -NHR₁, -NR₁R₂, Morpholino, Piperidino oder Azepano ist, wobei R₁ unsubstituiertes oder durch Hydroxy oder Carboxy substituiertes C₁-C₄-Alkyl ist, und R₂ unsubstituiertes oder durch Hydroxy, Sulfo, Carboxy oder Phenyl substituiertes C₁-C₄-Alkyl oder Phenyl ist,
W -NR₃- oder -O- sind, wobei R₃ Wasserstoff oder C₁-C₄-Alkyl sind,
A und B unabhängig voneinander ein cycloaliphatisches oder aromatisches Brückenglied sind,
Q₁ und Q₂ unabhängig voneinander einen Anthrachinonrest bedeuten, und z eine ganze Zahl 2, 3 oder 4 ist,
zusammen mit mindestens einem rotfärbenden Farbstoff der Formel 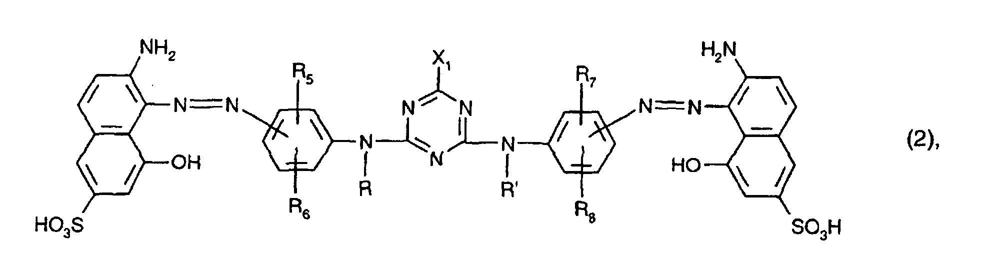 worin
R und R' unabhängig voneinander Wasserstoff oder gegebenenfalls substituiertes C₁-C₄-Alkyl,
R₅, R₆, R₇ und R₈ unabhängig voneinander Wasserstoff, C₁-C₄-Alkyl, C₁-C₄-Alkoxy, C₂-C₄-Alkanoylamino, Ureido, Halogen oder Sulfo sind und
X₁ Halogen, Hydroxy, C₁-C₄-Alkoxy, S-C₁-C₄-Alkyl, -NHR₁, -NR₁R₂, Morpholino, Piperidino oder Azepano ist, wobei R₁ unsubstituiertes oder durch Hydroxy oder Carboxy substituiertes C₁-C₄-Alkyl ist, und R₂ unsubstituiertes oder durch Hydroxy, Sulfo, Carboxy oder Phenyl substituiertes C₁-C₄-Alkyl oder Phenyl ist,
und zusammen mit mindestens einem gelb- oder orangefärbenden Farbstoff der Formel 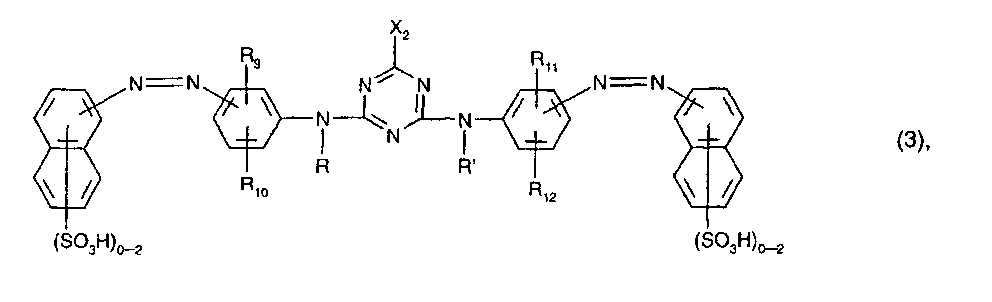 oder der Formel 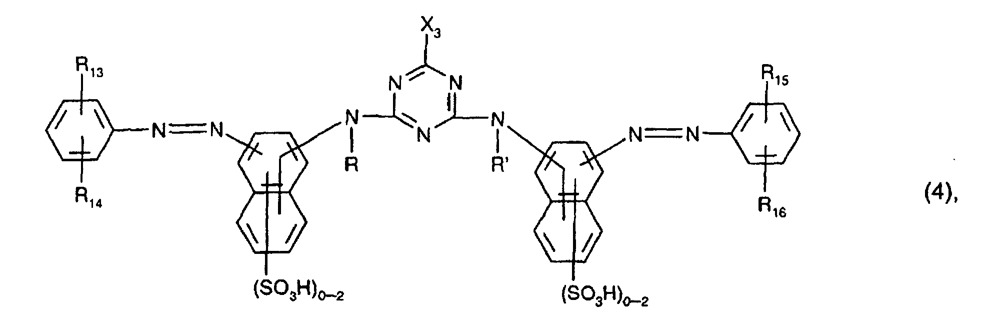 worin
R und R' unabhängig voneinander Wasserstoff oder gegebenenfalls substituiertes C₁-C₄-Alkyl,
X₂ und X₃ unabhängig voneinander Halogen, Hydroxy, C₁-C₄-Alkoxy, S-C₁-C₄-Alkyl, -NHR₁, -NR₁R₂, Morpholino, Piperidino oder Azepano ist, wobei R₁ unsubstituiertes oder durch Hydroxy oder Carboxy substituiertes C₁-C₄-Alkyl ist, und R₂ unsubstituiertes oder durch Hydroxy, Sulfo, Carboxy oder Phenyl substituiertes C₁-C₄-Alkyl oder Phenyl ist, und
R₉, R₁₀, R₁₁, R₁₂, R₁₃, R₁₄, R₁₅ und R₁₆ unabhängig voneinander Wasserstoff, C₁-C₄-Alkyl, C₁-C₄-Alkoxy, Ureido, Halogen, Sulfo oder gegebenenfalls im Alkylteil substituiertes C₂-C₄-Alkanoylamino oder C₁-C₄-Alkoxycarbonylamino bedeuten,
verwendet.

Unter Trichromie ist die additive Farbmischung passend gewählter gelb- bzw. orange-, rotund blaufärbender Farbstoffe zu verstehen, mit denen jede gewünschte Nuance des sichtbaren Farbspektrums durch geeignete Wahl der Mengenverhältnisse der Farbstoffe eingestellt werden kann.

Als C₁-C₄-Alkyl kommen für R, R', R₁, R₂, R₃, R₅, R₆, R₇, R₈, R₉, R₁₀, R₁₁, R₁₂, R₁₃, R₁₄, R₁₅ und R₁₆ z.B. Methyl, Aethyl, Propyl, Isopropyl, Butyl, Isobutyl, sek.-Butyl oder tert.-Butyl in Betracht. Bevorzugt sind hierbei Methyl oder Aethyl, insbesondere Methyl. Die Reste R und R' in der Bedeutung als C₁-C₄-Alkyl können unsubstituiert oder beispielsweise durch Hydroxy, C₁-C₄-Alkoxy, Halogen oder Sulfato substituiert sein. Vorzugsweise sind diese Reste unsubstituiert.

Als C₁-C₄-Alkoxy kommen für R₅, R₆, R₇, R₈, R₉, R₁₀, R₁₁, R₁₂, R₁₃, R₁₄, R₁₅, R₁₆ und X beispielsweise Methoxy, Aethoxy, Propoxy, Isopropoxy, Butoxy, sek.-Butoxy, Isobutoxy oder tert.-Butoxy, insbesondere Methoxy, in Betracht.
Als C₂-C₄-Alkanoylamino kommen für R₅, R₆, R₇, R₈, R₉, R₁₀, R₁₁, R₁₂, R₁₃, R₁₄, R₁₅ und R₁₆ z.B. Propionylamino oder insbesondere Acetylamino in Betracht. Die Reste R₉, R₁₀, R₁₁, R₁₂, R₁₃, R₁₄, R₁₅ und R₁₆ in der Bedeutung als C₂-C₄-Alkanoylamino können unsubstituiert oder z.B. im Alkylteil durch C₁-C₄-Alkoxy oder Hydroxy substituiert sein.

Als C₁-C₄-Alkoxycarbonylamino kommen für R₉, R₁₀, R₁₁, R₁₂, R₁₃, R₁₄, R₁₅ und R₁₆ insbesondere Methoxy- oder Aethoxycarbonylamino in Betracht. Die Reste R₉, R₁₀, R₁₁, R₁₂, R₁₃, R₁₄, R₁₅ und R₁₆ in der Bedeutung als C₁-C₄-Alkoxycarbonylamino können unsubstituiert oder z.B. im Alkylteil durch C₁-C₄-Alkoxy oder Hydroxy substituiert sein.

Als S-C₁-C₄-Alkyl kommen für X, X₁, X₂ und X₃ z.B. Methylthio, Ethylthio, Propylthio oder Butylthio in Betracht.

Als Halogen kommen für R₅, R₆, R₇, R₈, R₉, R₁₀, R₁₁, R₁₂, R₁₃, R₁₄, R₁₅, R₁₆, X, X₁, X₂ und X₃ beispielsweise Fluor oder Brom und insbesondere Chlor in Betracht.

A ist bevorzugt ein Cyclohexylen- oder Phenylenrest.

B ist bevorzugt ein Cyclohexylen- oder Phenylenrest.

W ist bevorzugt ein Rest der Formel -NR₃-.

X₁, X₂ und X₃ sind vorzugsweise Fluor oder Chlor, insbesondere Chlor.
R und R' sind bevorzugt unabhängig voneinander Wasserstoff oder C₁-C₄-Alkyl, insbesondere Wasserstoff.

R₃ ist bevorzugt Wasserstoff.

R₅, R₆, R₇ und R₈ sind bevorzugt unabhängig voneinander Wasserstoff, C₁-C₄-Alkyl, C₁-C₄-Alkoxy, C₂-C₄-Alkanoylamino, Ureido oder Halogen, insbesondere Wasserstoff.

R₉, R₁₀, R₁₁, R₁₂, R₁₃, R₁₄, R₁₅ und R₁₆ sind bevorzugt unabhängig voneinander Wasserstoff, C₁-C₄-Alkyl, C₁-C₄-Alkoxy, Ureido, Halogen oder gegebenenfalls im Alkylteil durch C₁-C₄-Alkoxy oder Hydroxy substituiertes C₂-C₄-Alkanoylamino oder C₁-C₄-Alkoxycarbonylamino.

Als blaufärbenden Farbstoff verwendet man bevorzugt mindestens einen Farbstoff der Formel 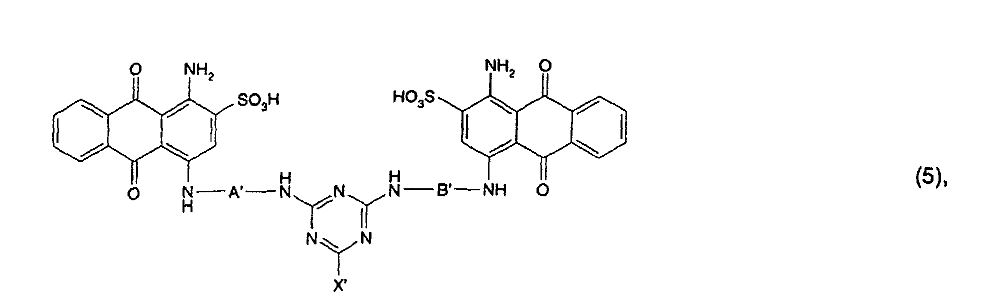 worin
X' -Cl, -OH, -N(CH₂CH₂OH)₂, -N(CH₃)(CH₂CH₂SO₃H), -NHCH₂COOH, -N(CH₂CH₂CH₂CH₃)₂, 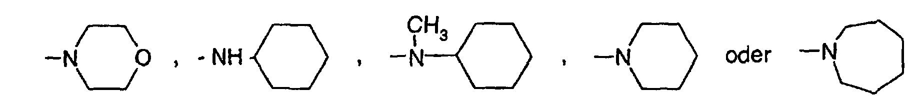 bedeutet,
A' einen Cyclohexylen oder Phenylenrest darstellt und
B' einen Cyclohexylen oder Phenylenrest darstellt.

Als blaufärbenden Farbstoff verwendet man besonders bevorzugt den Farbstoff der Formel

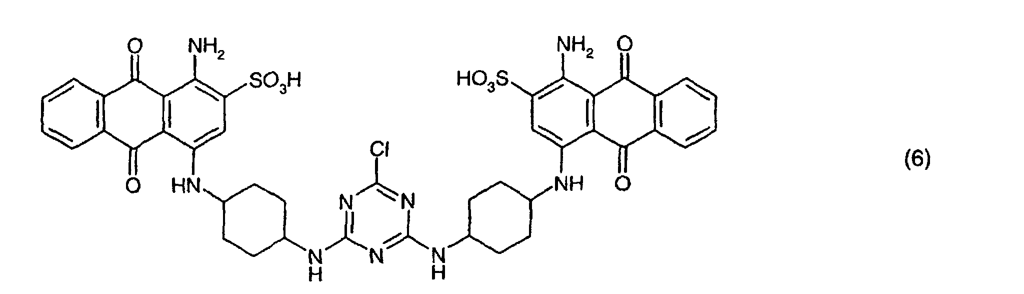

Ebenfalls besonders bevorzugt als blaufärbenden Farbstoff verwendet man den Farbstoff der Formel

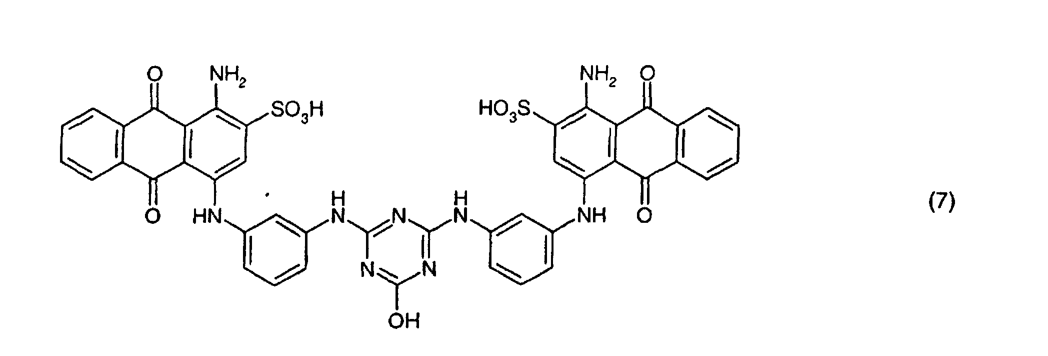

Als rotfärbenden Farbstoff verwendet man bevorzugt mindestens einen Farbstoff der Formel 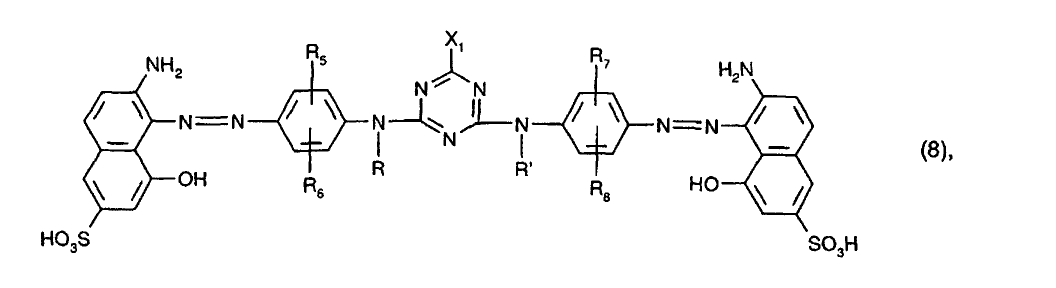 wobei für R, R', R₅, R₆, R₇, R₈ und X₁ die oben angegebenen Bedeutungen und Bevorzugungen gelten.

Besonders bevorzugt als rotfärbende Farbstoffe sind solche der Formel (2), insbesondere solche der Formel (8), worin
R und R' unabhängig voneinander Wasserstoff oder C₁-C₄-Alkyl, insbesondere Wasserstoff,
R₅, R₆, R₇ und R₈ unabhängig voneinander Wasserstoff, C₁-C₄-Alkyl, C₁-C₄-Alkoxy, C₂-C₄-Alkanoylamino, Ureido oder Halogen, insbesondere Wasserstoff, sind, und
X₁ Fluor oder insbesondere Chlor bedeutet.

Ganz besonders bevorzugt verwendet man als rotfärbenden Farbstoff einen Farbstoff der Formel

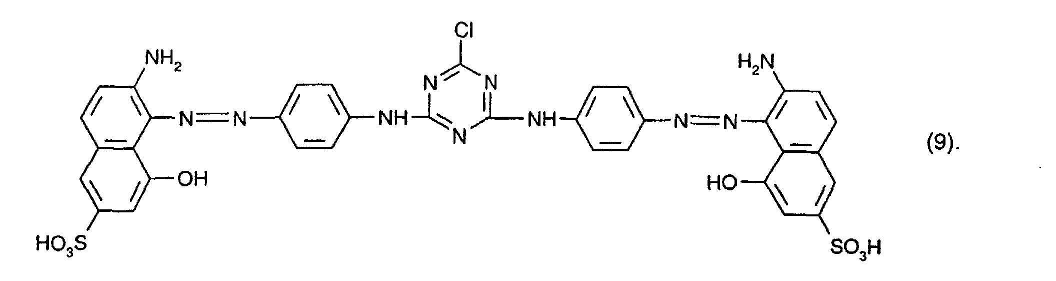

Die gelb- oder orangefärbenden Farbstoffe der Formeln (3) und (4) enthalten bevorzugt in den Naphthalin ringen jeweils nur eine oder zwei Sulfogruppen, insbesondere jeweils nur eine Sulfogruppe. Die Gesamtzahl der Sulfogruppen der Farbstoffe der Formeln (3) und (4) ist bevorzugt jeweils zwei bis vier, insbesondere zwei.

Bevorzugt als gelb- oder orangefärbende Farbstoffe der Formel (3) sind solche der Formel 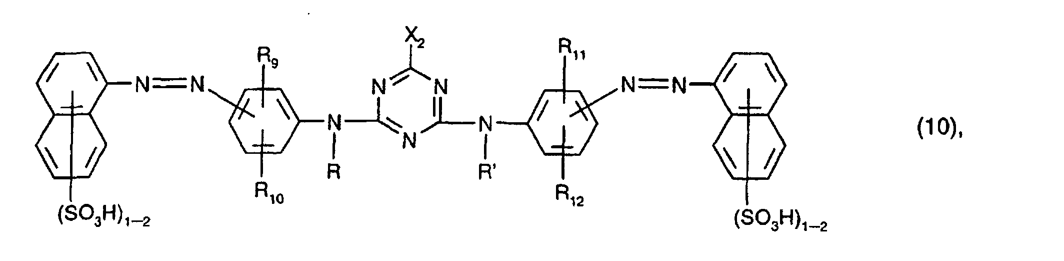 wobei für R, R', R₉, R₁₀, R₁₁, R₁₂ und X₂ die oben angegebenen Bedeutungen und Bevorzugungen gelten.
Besonders bevorzugt als gelb- oder orangefärbende Farbstoffe der Formel (3), insbesondere als Farbstoffe der Formel (10), sind solche, worin
R und R' unabhängig voneinander Wasserstoff oder C₁-C₄-Alkyl, insbesondere Wasserstoff, sind,
R₉, R₁₀, R₁₁ und R₁₂ unabhängig voneinander Wasserstoff, C₁-C₄-Alkyl, C₁-C₄-Alkoxy, Ureido, Halogen oder gegebenenfalls im Alkylteil durch C₁-C₄-Alkoxy oder Hydroxy substituiertes C₂-C₄-Alkanoylamino oder C₁-C₄-Alkoxycarbonylamino sind, wobei R₉ und R₁₁ vorzugsweise Wasserstoff bedeuten,
X₂ Fluor oder insbesondere Chlor ist und
die Naphthalinringe der Farbstoffe der Formel (3) bzw. der Formel (10) jeweils nur eine oder zwei Sulfogruppen, insbesondere jeweils nur eine Sulfogruppe,
enthalten.

Ganz besonders bevorzugt als gelb- oder orangefärbende Farbstoffe der Formel (3) sind solche der Formel 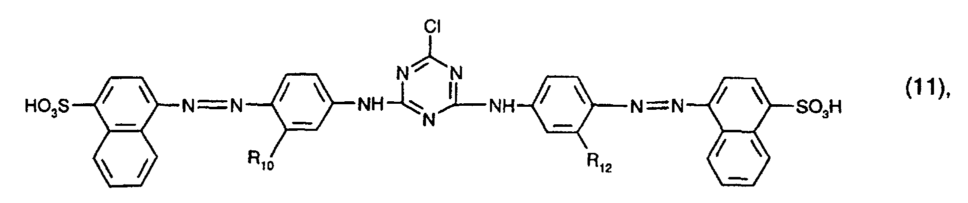 wobei für R₁₀ und R₁₂ die oben angegebenen Bedeutungen und Bevorzugungen gelten. Bevorzugt bedeuten R₁₀ und R₁₂ hierbei Wasserstoff, C₁-C₄-Alkyl, C₁-C₄-Alkoxy, Ureido, Halogen oder gegebenenfalls im Alkylteil durch C₁-C₄-Alkoxy oder Hydroxy substituiertes C₂-C₄-Alkanoylamino oder C₁-C₄-Alkoxycarbonylamino, insbesondere C₁-C₄-Alkyl, C₁-C₄-Alkoxy, Ureido, Halogen oder gegebenenfalls im Alkylteil durch C₁-C₄-Alkoxy oder Hydroxy substituiertes C₂-C₄-Alkanoylamino oder C₁-C₄-Alkoxycarbonylamino und vorzugsweise Ureido.

Bevorzugt als gelb- oder orangefärbende Farbstoffe der Formel (4) sind solche der Formel 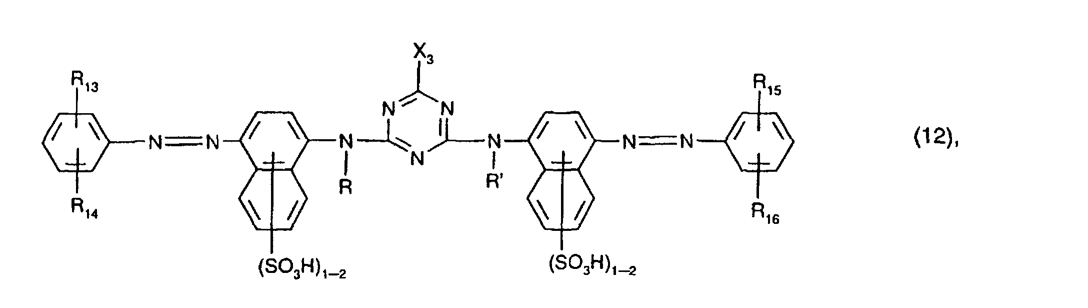 wobei für R, R', R₁₃, R₁₄, R₁₅, R₁₆ und X₃ die oben angegebenen Bedeutungen und Bevorzugungen gelten.

Besonders bevorzugt als gelb- oder orangefärbende Farbstoffe der Formel (4), insbesondere als Farbstoffe der Formel (12), sind solche, worin
R und R' unabhängig voneinander Wasserstoff oder C₁-C₄-Alkyl, insbesondere Wasserstoff, sind,
R₁₃, R₁₄, R₁₅ und R₁₆ unabhängig voneinander Wasserstoff, C₁-C₄-Alkyl, C₁-C₄-Alkoxy, Ureido, Halogen oder gegebenenfalls im Alkylteil durch C₁-C₄-Alkoxy oder Hydroxy substituiertes C₂-C₄-Alkanoylamino oder C₁-C₄-Alkoxycarbonylamino sind, wobei R₁₃ und R₁₅ vorzugsweise Wasserstoff bedeuten,
X₃ Fluor oder insbesondere Chlor ist und
die Naphthalinringe der Farbstoffe der Formel (4) bzw. der Formel (12) jeweils nur eine oder zwei Sulfogruppen, insbesondere jeweils nur eine Sulfogruppe,
enthalten.

Von besonderem Interesse als gelb- oder orangefärbende Farbstoffe sind solche der Formel (3), insbesondere solche der Formel (10) und vorzugsweise solche der Formel (11).
Von ganz besonderem Interesse als gelb- oder orangefärbende Farbstoffe sind solche der Formel (11), worin R₁₀ und R₁₂ Ureido bedeuten.

Eine bevorzugte Ausführungsform des erfindungsgemässen Verfahrens ist dadurch gekennzeichnet, dass man mindestens einen rotfärbenden Farbstoff der Formel (8) zusammen mit mindestens einem gelb- oder orangefärbenden Farbstoff der Formel (3), insbesondere der Formel (10) und vorzugsweise der Formel (11), verwendet. Für die blaufärbenden Farbstoffe der Formeln (1) und (2) gelten hierbei die oben angegebenen Bedeutungen und Bevorzugungen. Insbesondere verwendet man als blaufärbende Farbstoffe mindestens einen Farbstoff der Formeln (6) und (7).

Eine besonders bevorzugte Ausführungsform des erfindungsgemässen Verfahrens ist dadurch gekennzeichnet, dass man einen rotfärbenden Farbstoff der Formel (9) zusammen mit mindestens einem gelb- oder orangefärbenden Farbstoff der Formel (3), insbesondere der Formel (10) und vorzugsweise der Formel (11), verwendet. Für die blaufärbenden Farbstoffe der Formeln (1) und (2) gelten hierbei die oben angegebenen Bedeutungen und Bevorzugungen. Insbesondere verwendet man als blaufärbende Farbstoffe mindestens einen Farbstoff der Formeln (6) und (7).

Eine ganz besonders bevorzugte Ausführungsform des erfindungsgemässen Verfahrens ist dadurch gekennzeichnet, dass man einen rotfärbenden Farbstoff der Formel (9) zusammen mit einem gelb- oder orangefärbenden Farbstoff der Formel (11), worin R₁₀ und R₁₂ Ureido sind, verwendet. Für die blaufärbenden Farbstoffe der Formeln (1) und (2) gelten hierbei die oben angegebenen Bedeutungen und Bevorzugungen. Bevorzugt verwendet man als blaufärbende Farbstoffe mindestens einen Farbstoff der Formeln (6) und (7).

Einen weiteren Gegenstand der vorliegenden Erfindung stellen Farbstoffmischungen dar, welche eine Mischung von
mindestens einen blaufärbenden Farbstoff der Formel (1),
zusammen mit mindestens einem rotfärbenden Farbstoff der Formel (2) und
zusammen mit mindestens einem gelb- oder orangefärbenden Farbstoff der Formel (3) oder (4) enthalten. Hierbei gelten für die Farbstoffe der Formeln (1), (2), (3) und (4) sowie für deren Mischungen die oben angegebenen Bedeutungen und Bevorzugungen.

Die Farbstoffe der Formel (1) sind teilweise bekannt oder können in Analogie zu bekannten Farbstoffen hergestellt werden.
Die unter die generische Formel (1) fallenden Farbstoffe der Formeln (6) und (7) sind neu und stellen einen weiteren Gegenstand der vorliegenden Erfindung dar.

Der Farbstoff der Formel (6) kann z.B. so erhalten werden, indem man Cyanurchlorid mit einem Amin der Formel 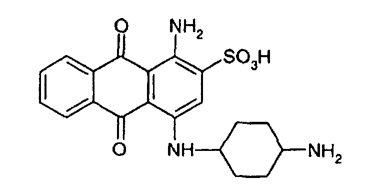 kondensiert.

Der Farbstoff der Formel (7) kann z.B. so erhalten werden, indem man Cyanurchlorid mit einem Amin der Formel 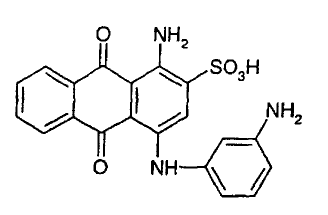 kondensiert und das entstandene Produkt hydrolisiert.

Bei der Herstellung der Farbstoffe der Formeln (6) und (7) setzt man das Cyanurchlorid mit 2 Aequivalenten der jeweiligen Anthrachinonverbindung zunächst bei einer Temperatur von -5 bis 20°C um, welche im Verlaufe der Umsetzung auf ca. 30 bis 50°C erhöht wird, wobei der pH-Wert durch Zugabe geeigneter Basen, z.B. Alkalimetalbasen wie Lithium-, Natrium- oder Kaliumhydroxid oder -carbonat, neutral bis leicht sauer, vorzugsweise bei einem pH-Wert zwischen 5 und 7 gehalten wird.

Die Farbstoffe der Formeln (2), (3) und (4) sind bekannt oder können in Analogie zu bekannten Farbstoffen hergestellt werden.

Farbstoffe der Formel (2) können beispielsweise erhalten werden, indem man Cyanurhalogenid mit den Aminen der Formeln 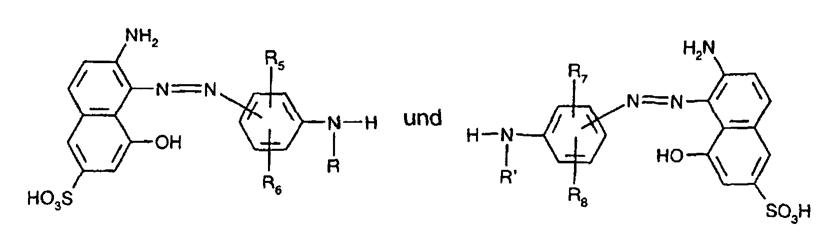 kondensiert.

Farbstoffe der Formel (3) können z.B. erhalten werden, indem man Cyanurhalogenid mit den Aminen der Formeln 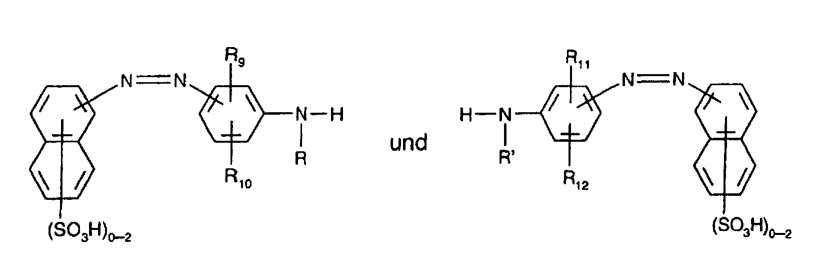 kondensiert.

Farbstoffe der Formel (4) können z.B. erhalten werden, indem man Cyanurhalogenid mit den Aminen der Formeln 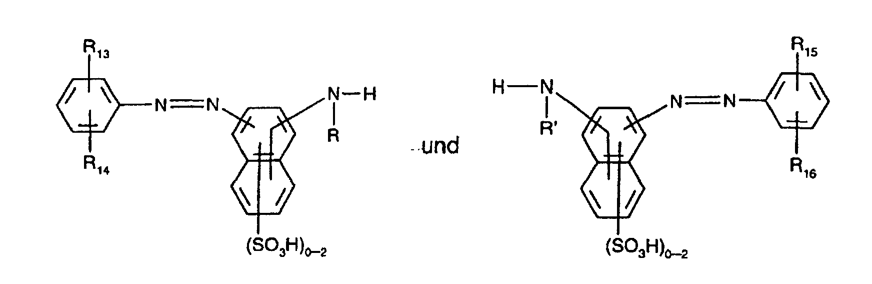 kondensiert.

Vorzugsweise setzt man das Cyanurhalogenid zunächst mit in etwa stöchiometrischen Mengen einer der zwei Aminoazoverbindungen bei einer Temperatur von -5 bis 20°C um, wobei der pH-Wert durch Zugabe geeigneter Basen, z.B. Alkalimetallbasen wie Lithium-, Natriumoder Kaliumhydroxid oder -carbonat, neutral bis leicht sauer, vorzugsweise bei 5 bis 7, gehalten wird. Das erhaltene Triazinderivat kann abgeschieden werden oder es kann das Reaktionsgemisch direkt für eine weitere Reaktion verwendet werden. Zu dem erhaltenen Reaktionsgemisch oder dem zuvor abgeschiedenen Triazinderivat werden zweckmässigerweise in etwa stöchiometrische Mengen der anderen der zwei Aminoazoverbindungen gegeben und diese bei leicht erhöhter Temperatur, vorzugsweise bei 30 bis 50°C und einem neutralen bis leicht sauren pH-Wert, der vorzugsweise 6 bis 7 beträgt, mit dem Triazinderivat zur Reaktion gebracht. Handelt es sich bei den zwei Aminoazoverbindungen um identische Aminoazoverbindungen, so setzt man ca. 2 Aequivalente dieses Aminoazofarbstoffes mit 1 Aequivalent Cyanurhalogenid um, wobei die Temperatur vorzugsweise zunächst bei -5 bis 20°C gehalten und dann auf ca. 30 bis 50°C erhöht wird.

Die Aminoazoverbindungen sind bekannt oder können in Analogie zu bekannten Verbindungen hergestellt werden. So können diese Azoverbindungen durch allgemein übliche Diazotierungs- und Kupplungsreaktionen erhalten werden.

Die Diazotierung erfolgt üblicherweise mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 30°C und vorzugsweise bei 0 bis 10°C.

Die Kupplung erfolgt üblicherweise bei sauren, neutralen bis schwach alkalischen pH-Werten und Temperaturen von beispielsweise -5 bis 30°C, vorzugsweise 0 bis 25°C.

Die in dem erfindungsgemässen Verfahren zum Trichromie-Färben oder -Bedrucken verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kaliumoder Ammoniumsalze oder das Salz des Mono-, Di- oder Triäthanolamins genannt.

Die in dem erfindungsgemässen Verfahren verwendeten Farbstoffe können weitere Zusätze, wie z.B. Kochsalz oder Dextrin, enthalten.

Das erfindungsgemässe Verfahren zum Trichromie-Färben oder -Bedrucken kann auf die üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Das erfindungsgemässe Verfahren zum Trichromie-Färben oder -Bedrucken ist auch zum Färben aus Kurzflotten, wie z.B. bei Kontinuefärbeverfahren oder diskontinuierlichen und kontinuierlichen Schaumfärbeverfahren, geeignet.

Die Mengen, in denen die einzelnen Farbstoffe in den Färbebädern oder Druckpasten verwendet werden, können je nach der gewünschten Farbtiefe in weiten Grenzen schwanken, im allgemeinen haben sich Mengen von 0,01 bis 15 Gew.-%, insbesondere 0,1 bis 10 Gew.-%, bezogen auf das Färbegut bzw. die Druckpaste, als vorteilhaft erwiesen.

Bevorzugt ist das Färben, welches insbesondere nach dem Ausziehverfahren erfolgt.

Vorzugsweise färbt man bei einem pH-Wert von 3 bis 7, insbesondere 3 bis 5. Das Flottenverhältnis kann innerhalb eines weiten Bereichs gewählt werden, z.B. von 1:5 bis 1:50, vorzugsweise 1:5 bis 1:30. Vorzugsweise färbt man bei einer Temperatur von 70 bis 110°C, insbesondere 80 bis 105°C.

Die in dem erfindungsgemässen Verfahren verwendeten Farbstoffe zeichnen sich beim Trichromie-Färben oder -Bedrucken durch gleichmässigen Farbaufbau, gutes Aufziehverhalten, gute Nuancenkonstanz auch in verschiedenen Konzentrationen, gute Echtheiten und Löslichkeit sowie insbesondere durch sehr gute Kombinierbarkeit aus.

Das erfindungsgemässe Verfahren zum Trichromie-Färben oder -Bedrucken eignet sich zum Färben oder Bedrucken sowohl von natürlichen Polyamidmaterialien wie z.B. Wolle, wie insbesondere von synthetischen Polyamidmaterialien, wie z.B. Polyamid 6 oder Polyamid 6.6, und ist geeignet zum Färben oder Bedrucken von Woll- und synthetischen Polyamid-Mischgeweben oder -Garnen.

Das genannte Textilmaterial kann dabei in den verschiedensten Verarbeitungsformen vorliegen, wie z.B. als Faser, Garn, Gewebe, Gewirke oder insbesondere in Form von Teppichen.

Es werden egale Färbungen mit guten Allgemeinechtheiten, insbesondere guter Reib-, Nass-, Nassreib- und Lichtechtheit erhalten.

In den folgenden Beispielen stehen Teile für Gewichtsteile. Die Temperaturen sind in Celsiusgraden angegeben. Die Beziehung zwischen Gewichtsteilen und Volumenteilen ist dieselbe wie diejenige zwischen Gramm und Kubikzentimeter.

### Beispiel 1:

133,0 g 1-Amino-4-[(3-aminophenyl)amino]-anthrachinon-2-sulfosäure Natrium-salz, welche aus 1-Amino-4-brom-anthrachinon-2-sulfosäure und 1,3-Phenylendiamin in wässrigem Medium nach üblicher, bekannter Synthese hergestellt wurde, (Aktivgehalt 69.6%), werden in 1200 ml Wasser bei Raumtemperatur unter Rühren vorgelegt. Der pH-Wert wird mit 10 ml einer 32%-igen Salzsäure auf 4 gestellt. Zu der entstandenen Suspension tropft man innerhalb von 35 Minuten eine Lösung von 20,8 g Cyanurchlorid in 400 ml Dioxan. Während des Zutropfens wird der pH-Wert bei 4 gehalten und danach allmählich auf 7 mit Hilfe von ca. 112 ml einer wässrigen, 1 molarer Natriumcarbonat-Lösung erhöht. Anschliessend wird der pH-Wert mittels einer 5 normalen Natronlauge auf 9 gestellt und 18 Stunden bei Raumtemperatur und konstant gehaltenem pH-Wert von 9 gerührt. Dabei werden 44 ml Natronlauge verbraucht. Das ausgefallene Produkt wird abfiltriert und mit 600 ml einer 7,5%-iger wässrigen Kochsalz-Lösung gewaschen. Nach anschliessendem Trocknen unter Vacuum bei 60°C erhält man 150 g eines dunkelblauen Farbstoffes der Formel

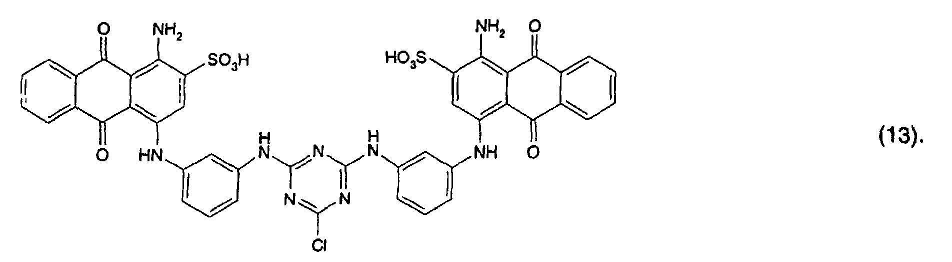

### Beispiel 2:

50 g des in Beispiel 1 hergestellten Farbstoffes der Formel (13) werden in 500 ml Wasser/Dioxan im Verhältnis 1:1 gelöst. Nach Zugabe von 50 ml einer 30%-igen wässrigen Natronlauge wird das Gemisch auf eine Temperatur zwischen 80 und 85°C erwärmt und 4 Stunden gerührt. Nach dem Abkühlen wird der pH-Wert durch Zutropfen von ca. 40 ml einer 32%-igen Salzsäure auf 7 gestellt. Das ausgefallene Produkt wird abfiltriert und im Vacuum bei 70°C getrocknet. Man erhält 42 g eines dunkel-blauen Farbstoffes der Formel

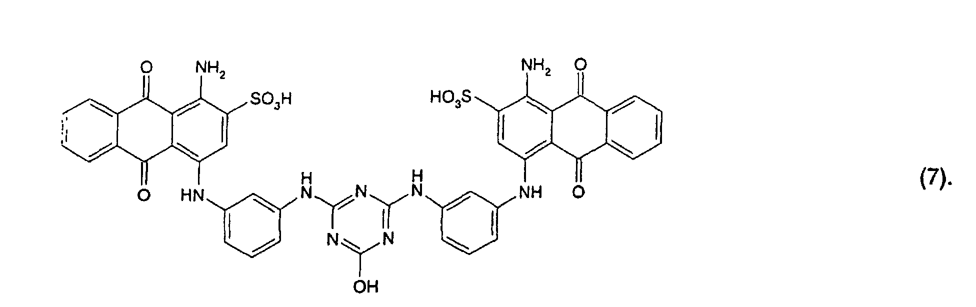

### Beispiel 3:

4,65 g des in Beispiel 1 hergestellten Farbstoffes der Formel (13) werden in 100 ml Wasser/Dioxan im Verhältnis 1:1 gelöst. Nach Zugabe von 7,5 g Glycin und 10 ml einer 2 normalen Natronlauge wird das Gemisch auf eine Temperatur von 85-90°C erwärmt und während 3 Stunden gerührt. Nach dem Abkühlen wird das ausgefallene Produkt abfiltriert und mit 50 ml einer 10%-igen wässrigen Kochsalz-Lösung gewaschen. Nach dem Trocknen im Vacuum bei 70°C erhält man 3,5 g eines dunkelblauen Farbstoffes der Formel

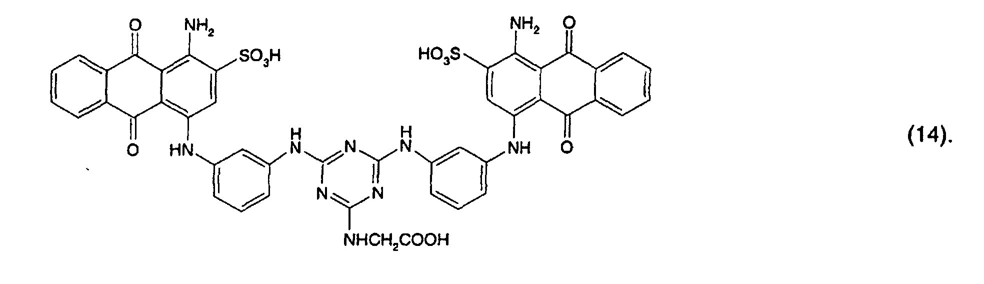

In Analogie zu dem in Beispiel 3 beschriebenen Verfahren können folgende in der Tabelle 1 aufgeführten Farbstoffe hergestellt werden:

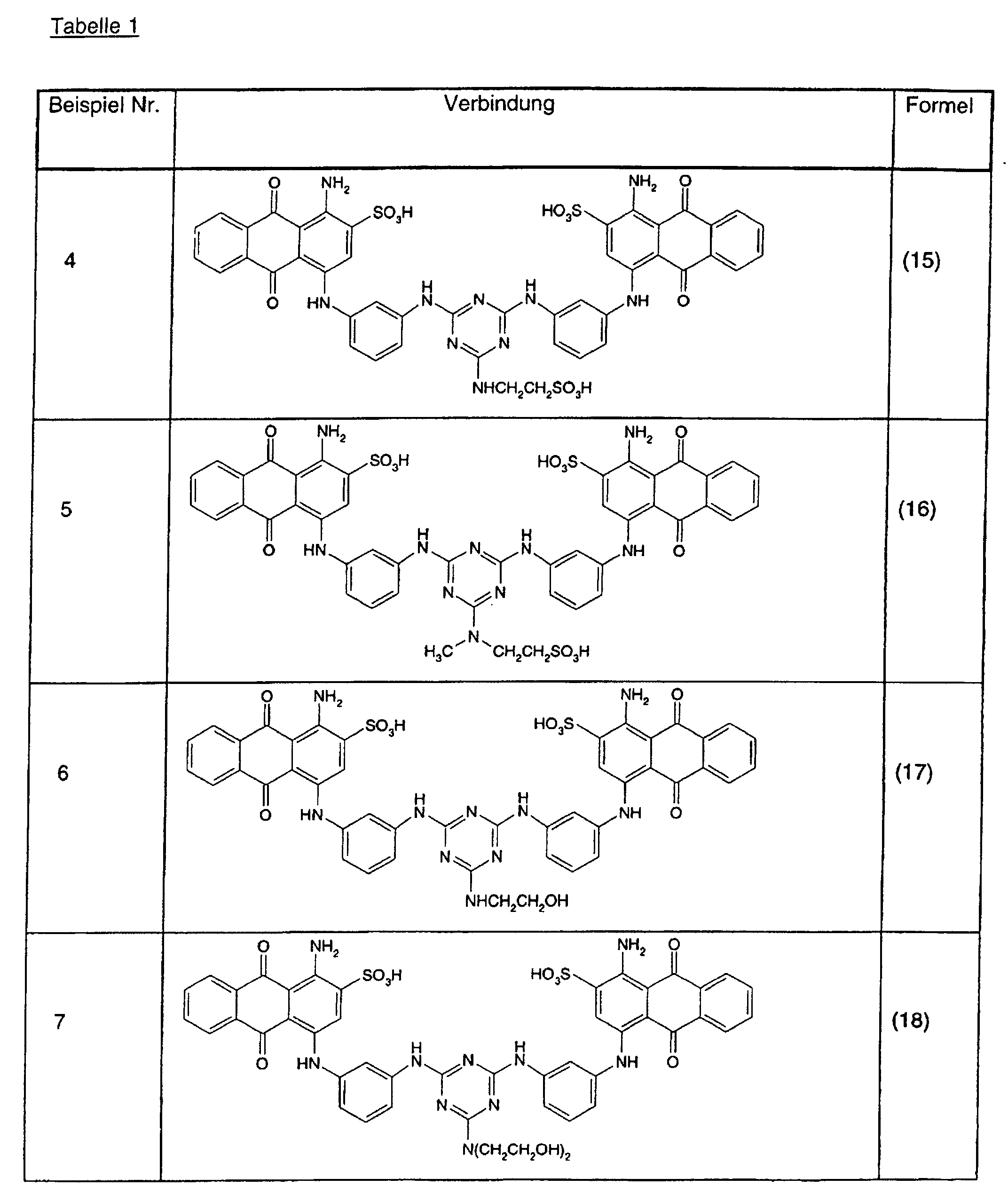

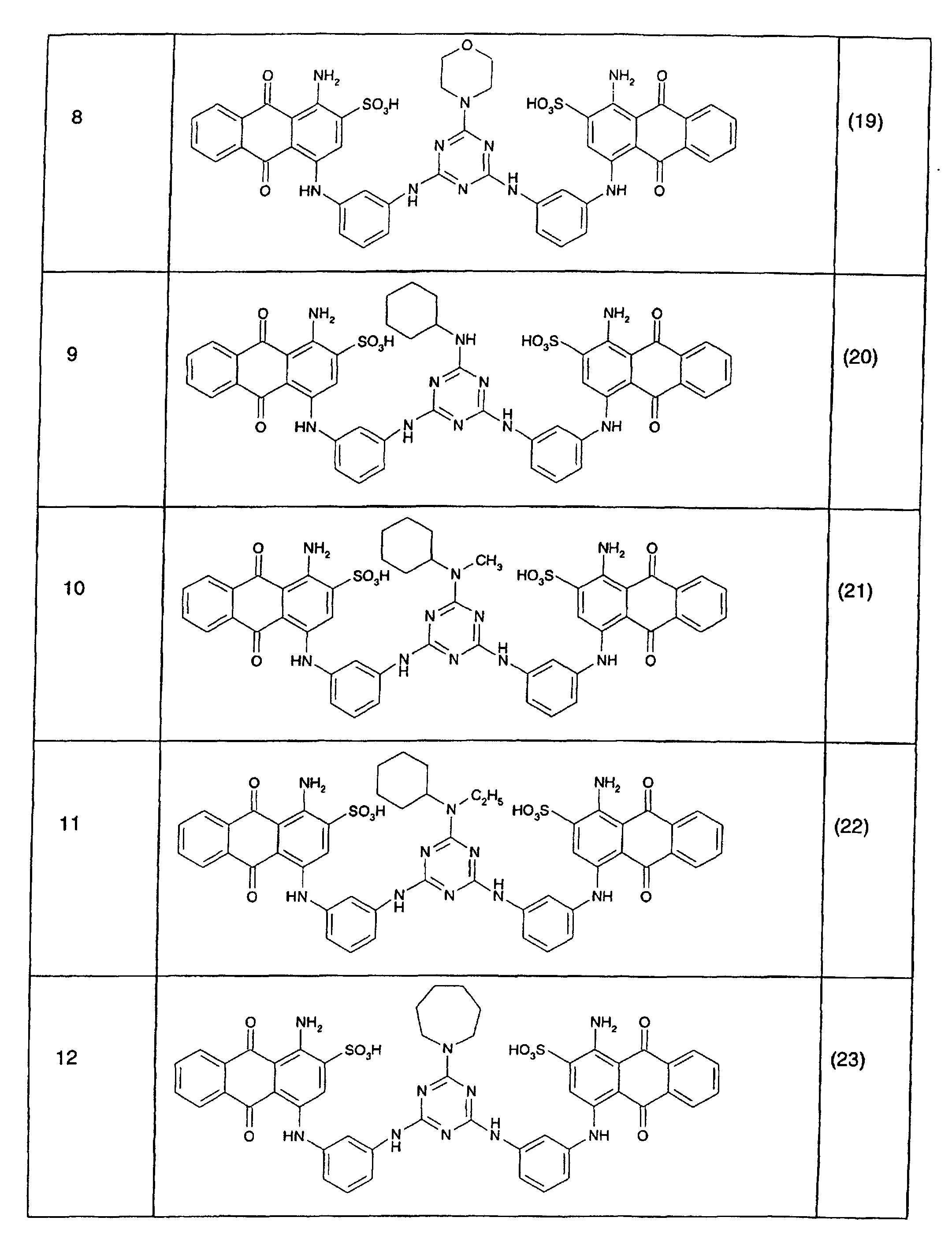

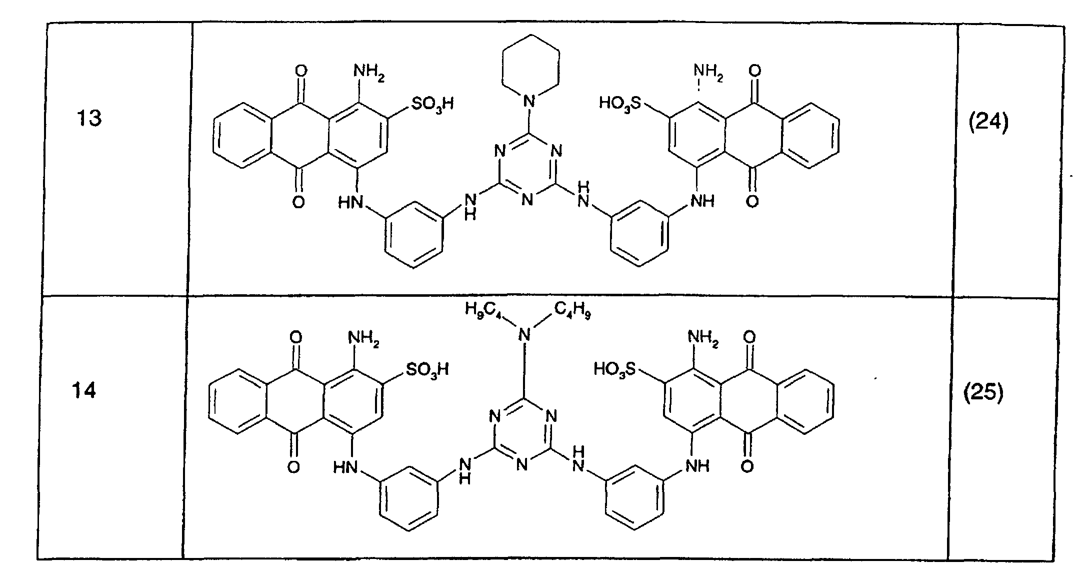

### Beispiel 15

Verfährt man wie in Beispiel 1 angegeben, verwendet aber anstatt 133,0 g 1-Amino-4-[(3-aminophenyl)amino]-anthrachinon-2-sulfosäure Natrium-salz 26 g der Verbindung der Formel 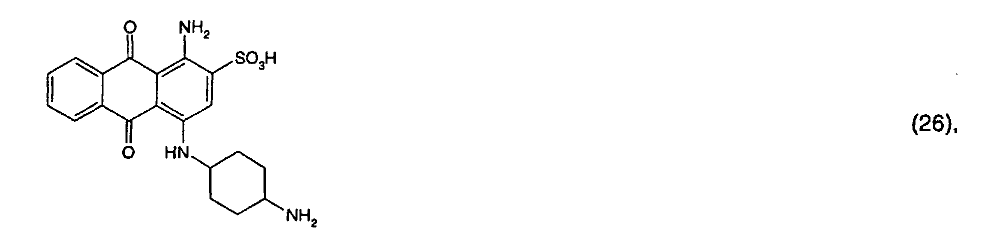 und equimolare Mengen der anderen Reaktanden erhält man 29 g eines dunkelblauen Farbstoffes der Formel

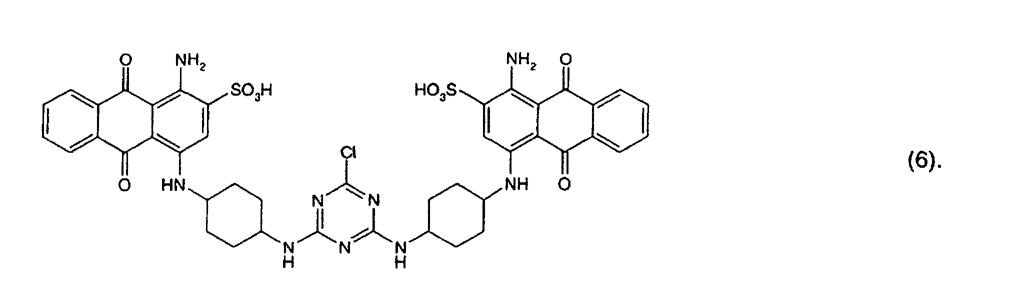

### Beispiel 16:

Verfährt man wie in Beispiel 1 angegeben, verwendet aber anstatt 133,0 g 1-Amino-4-[(3-aminophenyl)amino]-anthrachinon-2-sulfosäure Natrium-salz 15 g der Verbindung der Formel 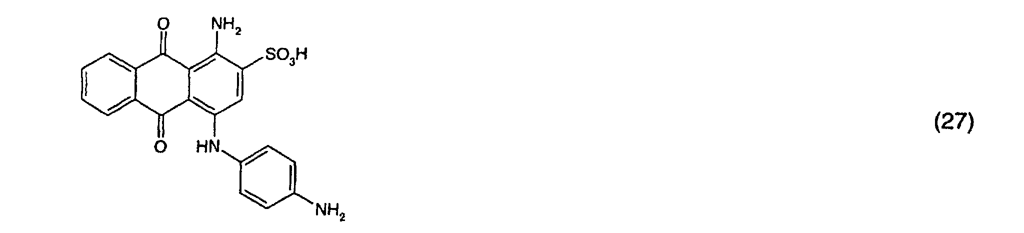 und equimolare Mengen der anderen Reaktanden erhält man 22 g eines dunkelblauen Farbstoffes der Formel

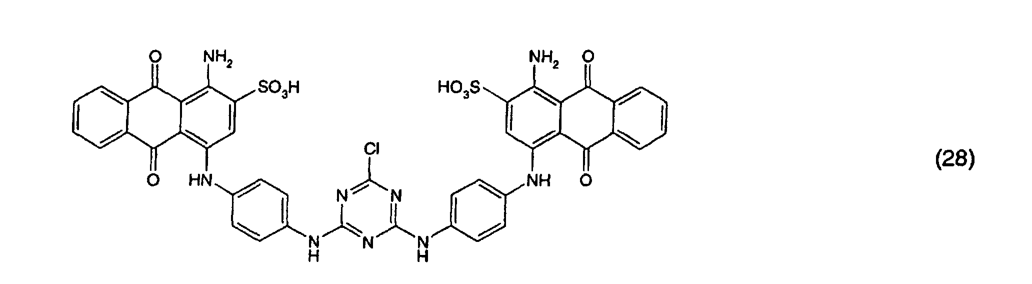

### Färbebeispiel 1:

10 Gewichtsteile Polyamid-6,6-Fasermaterial (®Helancatricot) werden bei 30°C in ein Färbebad eingeführt, das auf 100 Gewichtsteile Wasser,
0,063 Gewichtsteile des Farbstoffes der Formel 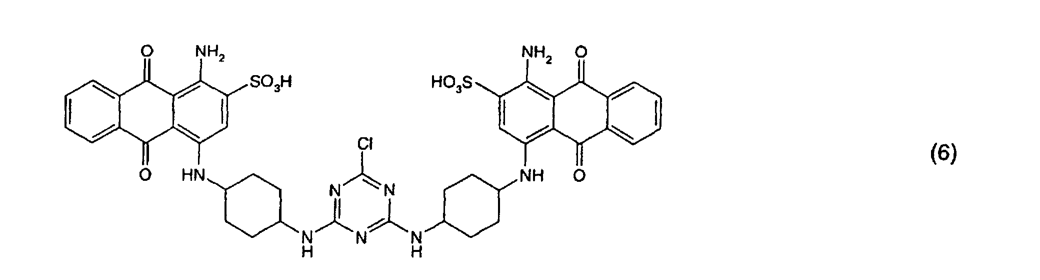 aus Beispiel 15,
0,017 Teile des Farbstoffes der Formel 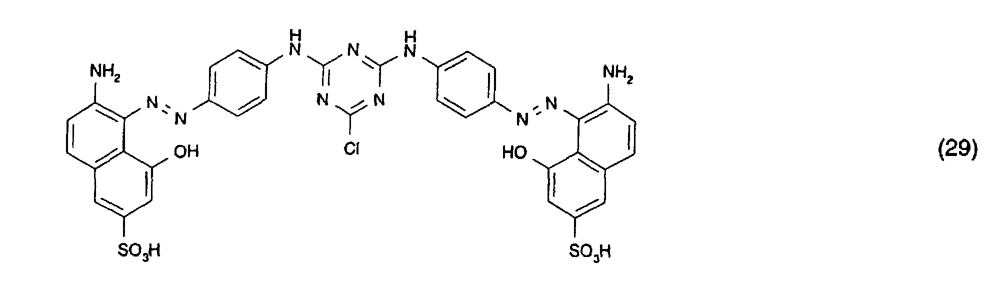 0,015 Teile des Farbstoffes der Formel 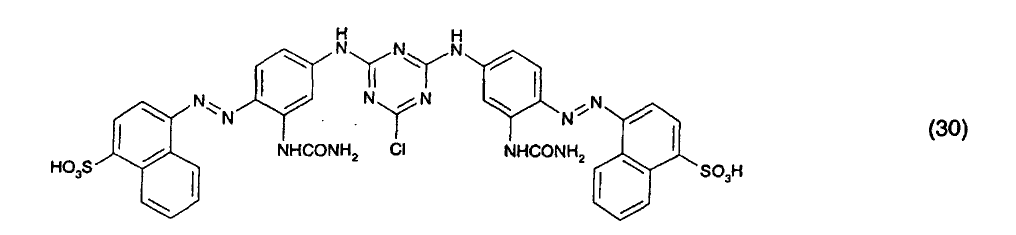 und 0,1 Gewichtsteile Natriumacetat enthält, und mit Essigsäure auf einen pH-Wert von 5 eingestellt wird.

Das Färbebad wird im Verlauf von 45 Minuten zum Sieden gebracht und während weiteren 60 Minuten bei Kochtemperatur gehalten. Das gefärbte Fasermaterial wird anschliessend herausgenommen, gespült und getrocknet. Man erhält ein bordeaux gefärbtes Gewebestück, das gute Gesamtechtheiten aufweist, wobei die 3 Farbstoffe sind gleichzeitig aufgezogen sind.

### Färbebeispiel 2:

Verfährt man wie in Färbebeispiel 1 angegeben, verwendet aber anstatt 0,063 Gewichtsteile des Farbstoffes der Formel (6) 0,033 Gewichtsteile des Farbstoffes der Formel 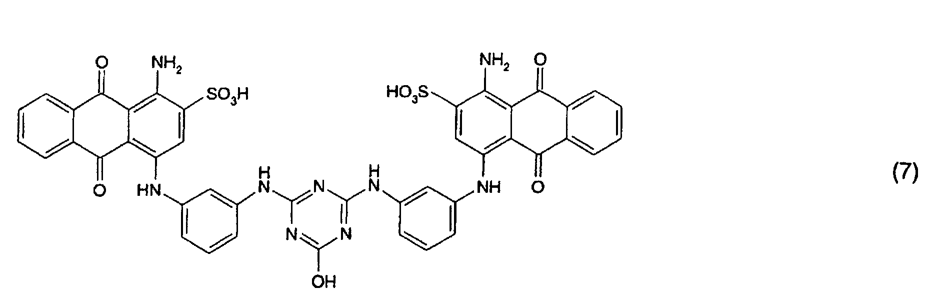 aus Beispiel 2,
so erhält man eine Färbung mit gleich guten Gesamtechtheiten, wobei alle 3 Farbstoffe ebenfalls gleichzeitig aufgezogen sind.

## Patentansprüche

1. Verfahren zum Trichromie-Färben oder -Bedrucken von natürlichem oder synthetischem Polyamidfasermaterial, **dadurch gekennzeichnet, dass** man
mindestens einen blaufärbenden Farbstoff der Formel 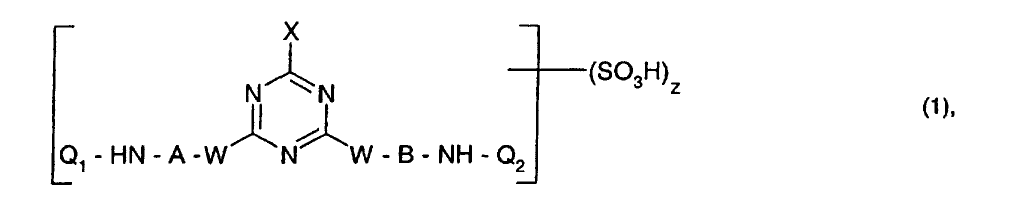 worin
X Halogen, Hydroxy, C₁-C₄-Alkoxy, S-C₁-C₄-Alkyl, -NHR₁, -NR₁R₂, Morpholino, Piperidino oder Azepano ist, wobei R₁ unsubstituiertes oder durch Hydroxy oder Carboxy substituiertes C₁-C₄-Alkyl ist, und R₂ unsubstituiertes oder durch Hydroxy, Sulfo, Carboxy oder Phenyl substituiertes C₁-C₄-Alkyl oder Phenyl ist, W -NR₃- oder -O- sind, wobei R₃ Wasserstoff oder C₁-C₄-Alkyl sind, A und B unabhängig voneinander ein cycloaliphatisches oder aromatisches Brückenglied sind, Q₁ und Q₂ unabhängig voneinander einen Anthrachinonrest bedeuten,
und z eine ganze Zahl 2, 3 oder 4 ist,
zusammen mit mindestens einem rotfärbenden Farbstoff der Formel 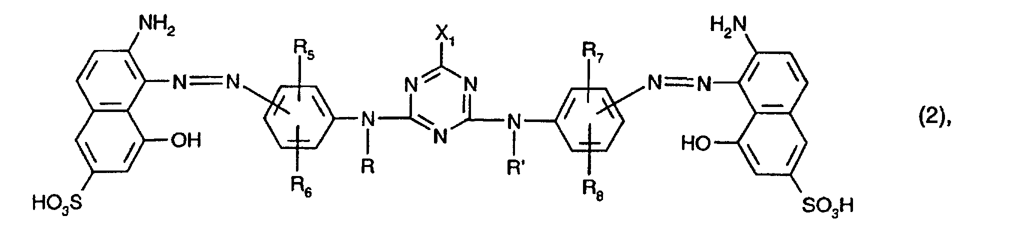 worin
R und R' unabhängig voneinander Wasserstoff oder gegebenenfalls substituiertes C₁-C₄-Alkyl, R₅, R₆, R₇ und R₈ unabhängig voneinander Wasserstoff, C₁-C₄-Alkyl, C₁-C₄-Alkoxy, C₂-C₄-Alkanoylamino, Ureido, Halogen oder Sulfo sind und X₁ Halogen, Hydroxy, C₁-C₄-Alkoxy, S-C₁-C₄-Alkyl, -NHR₁, -NR₁R₂, Morpholino, Piperidino oder Azepano ist, wobei R₁ unsubstituiertes oder durch Hydroxy oder Carboxy substituiertes C₁-C₄-Alkyl ist, und R₂ unsubstituiertes oder durch Hydroxy, Sulfo, Carboxy oder Phenyl substituiertes C₁-C₄-Alkyl oder Phenyl ist,
und zusammen mit mindestens einem gelb- oder orangefärbenden Farbstoff der Formel 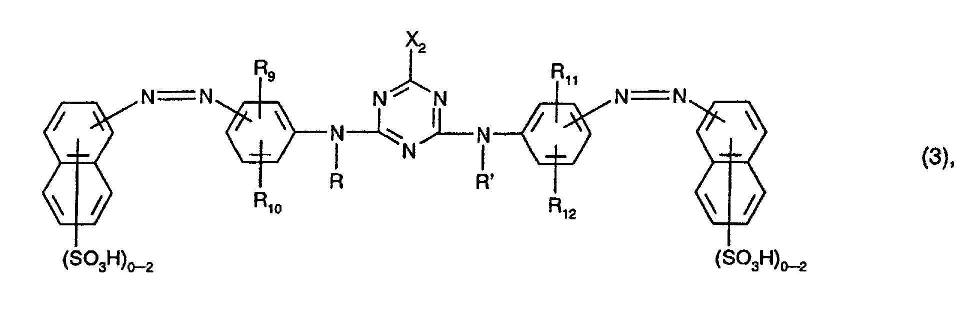 oder der Formel 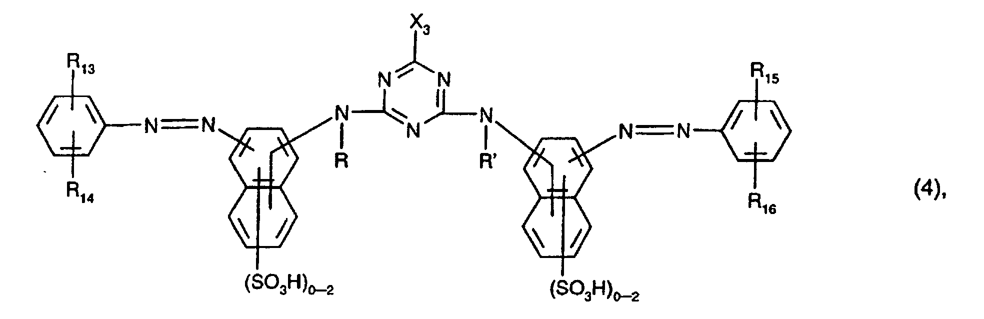 worin
R und R' unabhängig voneinander Wasserstoff oder gegebenenfalls substituiertes C₁-C₄-Alkyl, X₂ und X₃ unabhängig voneinander Halogen, Hydroxy, C₁-C₄-Alkoxy, S-C₁-C₄-Alkyl, -NHR₁, -NR₁R₂, Morpholino, Piperidino oder Azepano ist, wobei R₁ unsubstituiertes oder durch Hydroxy oder Carboxy substituiertes C₁-C₄-Alkyl ist, und R₂ unsubstituiertes oder durch Hydroxy, Sulfo, Carboxy oder Phenyl substituiertes C₁-C₄-Alkyl oder Phenyl ist, und R₉, R₁₀, R₁₁, R₁₂, R₁₃, R₁₄, R₁₅ und R₁₆ unabhängig voneinander Wasserstoff, C₁-C₄-Alkyl, C₁-C₄-Alkoxy, Ureido, Halogen, Sulfo oder gegebenenfalls im Alkylteil substituiertes C₂-C₄-Alkanoylamino oder C₁-C₄-Alkoxycarbonylamino bedeuten,
verwendet.

2. Verfahren gemäss Anspruch 1, **dadurch gekennzeichnet, dass** man mindestens einen blaufärbenden Farbstoff der Formel 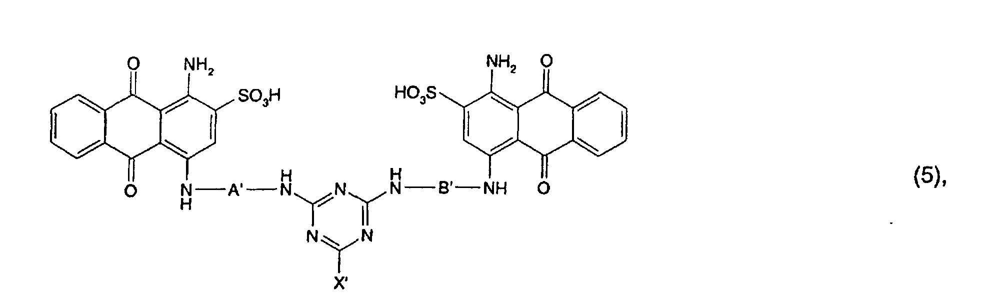 worin
X' -Cl, -OH, -N(CH₂CH₂OH)₂, -N(CH₃)(CH₂CH₂SO₃H), -NHCH₂COOH, -N(CH₂CH₂CH₂CH₃)₂, 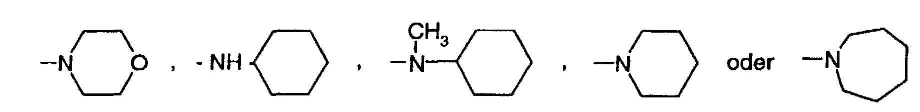 bedeutet, A' einen Cyclohexylen oder Phenylenrest darstellt und B' einen Cyclohexylen oder Phenylenrest darstellt,
verwendet.

3. Farbstoff der Formel

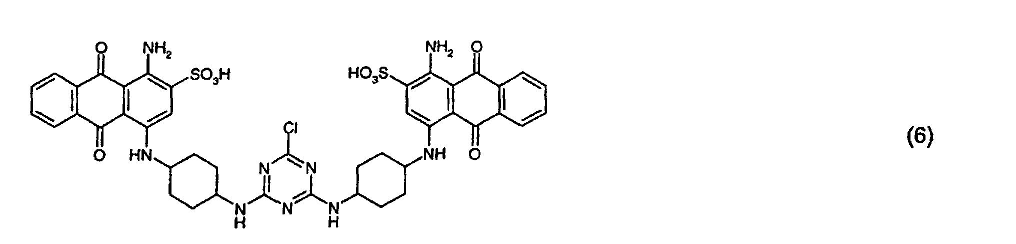

4. Farbstoff der Formel

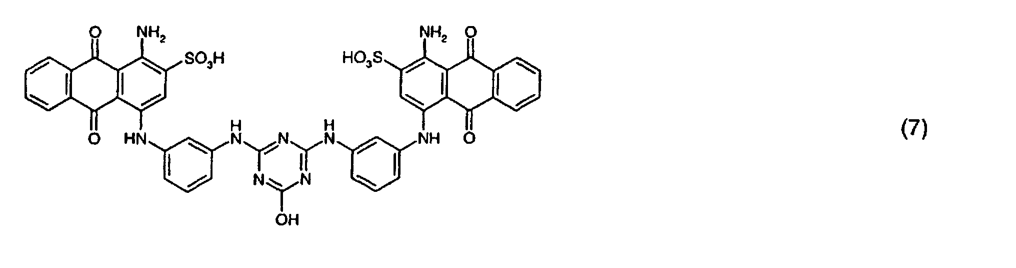

5. Verfahren zur Herstellung des Farbstoffes der Formel (6) gemäss Anspruch 3, **dadurch gekennzeichnet, dass** man Cyanurchlorid mit einem Amin der Formel 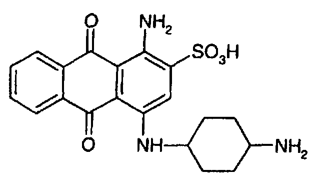 kondensiert.

6. Verfahren zur Herstellung des Farbstoffes der Formel (7) gemäss Anspruch 4, **dadurch gekennzeichnet, dass** man Cyanurchlorid mit einem Amin der Formel 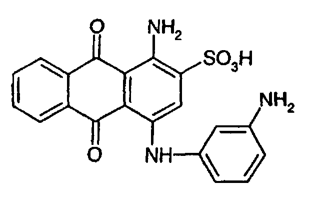 kondensiert und das entstandene Produkt hydrolisiert.

7. Verfahren gemäss einem der Ansprüche 1 und 2, **dadurch gekennzeichnet, dass** man Wolle oder synthetische Polyamidfasermaterialien färbt oder bedruckt.

8. Verfahren gemäss Anspruch 7, **dadurch gekennzeichnet, dass** man synthetische Polyamidfasermaterialien färbt oder bedruckt.

9. Verwendung der Farbstoffe der Formeln (1), (2) und (3) oder (4) gemäss Anspruch 1 zum Trichromie-Färben oder -Bedrucken von natürlichen oder synthetischen Polyamidfasermaterialien.

10. Die mit den Farbstoffen der Formeln (1), (2) und (3) oder (4) gemäss Anspruch 1 gefärbten oder bedruckten natürlichen oder synthetischen Polyamidfasermaterialien.

11. Farbstoffmischung enthaltend mindestens einen blaufärbenden Farbstoff der Formel 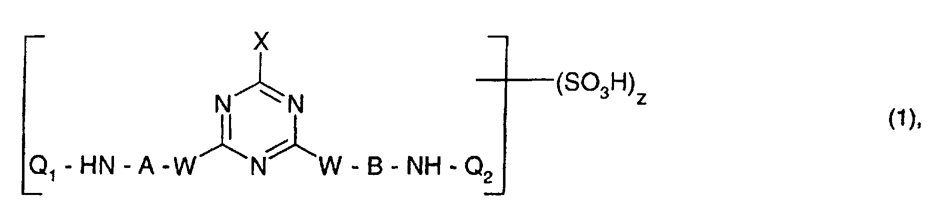 worin
X Halogen, Hydroxy, C₁-C₄-Alkoxy, S-C₁-C₄-Alkyl, -NHR₁, -NR₁R₂, Morpholino, Piperidino oder Azepano ist, wobei R₁ unsubstituiertes oder durch Hydroxy oder Carboxy substituiertes C₁-C₄-Alkyl ist, und R₂ unsubstituiertes oder durch Hydroxy, Sulfo, Carboxy oder Phenyl substituiertes C₁-C₄-Alkyl oder Phenyl ist, W -NR₃- oder -O- sind, wobei R₃ Wasserstoff oder C₁-C₄-Alkyl sind, A und B unabhängig voneinander ein cycloaliphatisches oder aromatisches Brückenglied sind, Q₁ und Q₂ unabhängig voneinander einen Anthrachinonrest bedeuten, und z eine ganze Zahl 2, 3 oder 4 ist,
mindestens einen rotfärbenden Farbstoff der Formel 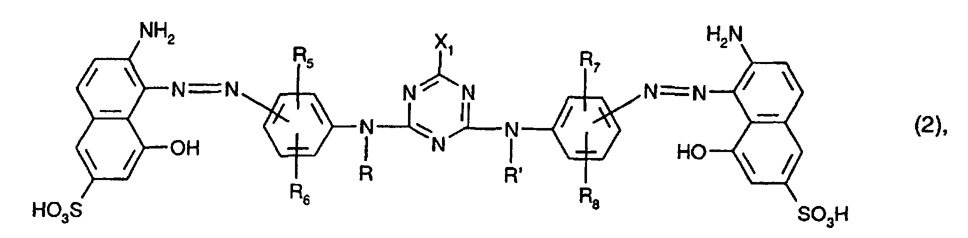 worin
R und R' unabhängig voneinander Wasserstoff oder gegebenenfalls substituiertes C₁-C₄-Alkyl, R₅, R₆, R₇ und R₈ unabhängig voneinander Wasserstoff, C₁-C₄-Alkyl, C₁-C₄-Alkoxy, C₂-C₄-Alkanoylamino, Ureido, Halogen oder Sulfo sind und X₁ Halogen, Hydroxy, C₁-C₄-Alkoxy, S-C₁-C₄-Alkyl, -NHR₁, -NR₁R₂, Morpholino, Piperidino oder Azepano ist, wobei R₁ unsubstituiertes oder durch Hydroxy oder Carboxy substituiertes C₁-C₄-Alkyl ist, und R₂ unsubstituiertes oder durch Hydroxy, Sulfo, Carboxy oder Phenyl substituiertes C₁-C₄-Alkyl oder Phenyl ist,
und mindestens einen gelb- oder orangefärbenden Farbstoff der Formel 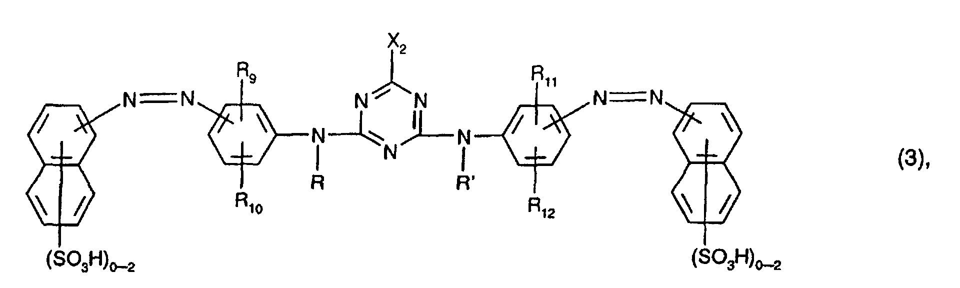 oder der Formel 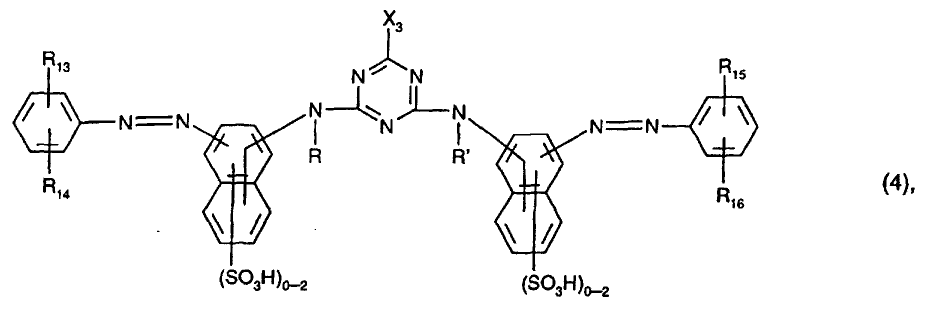 worin
R und R' unabhängig voneinander Wasserstoff oder gegebenenfalls substituiertes C₁-C₄-Alkyl, X₂ und X₃ unabhängig voneinander Halogen, Hydroxy, C₁-C₄-Alkoxy, S-C₁-C₄-Alkyl, -NHR₁, -NR₁R₂, Morpholino, Piperidino oder Azepano ist, wobei R₁ unsubstituiertes oder durch Hydroxy oder Carboxy substituiertes C₁-C₄-Alkyl ist, und R₂ unsubstituiertes oder durch Hydroxy, Sulfo, Carboxy oder Phenyl substituiertes C₁-C₄-Alkyl oder Phenyl ist, und R₉, R₁₀, R₁₁, R₁₂, R₁₃, R₁₄, R₁₅ und R₁₆ unabhängig voneinander Wasserstoff, C₁-C₄-Alkyl, C₁-C₄-Alkoxy, Ureido, Halogen, Sulfo oder gegebenenfalls im Alkylteil substituiertes C₂-C₄-Alkanoylamino oder C₁-C₄-Alkoxycarbonylamino bedeuten.

## Claims

1. A method for the trichromatic dyeing or printing of natural or synthetic polyamide fibre material, which method comprises using
at least one blue-dyeing dye of formula 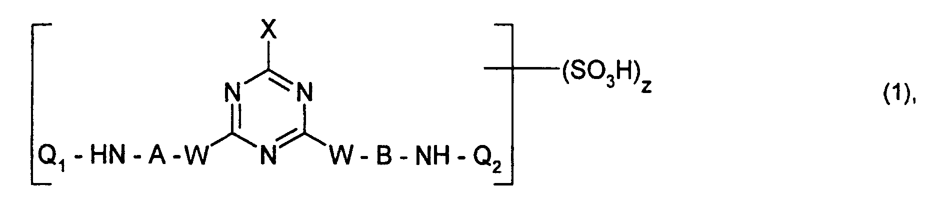 wherein
X is halogen, hydroxy, C₁-C₄alkoxy, S-C₁-C₄alkyl, -NHR₁, -NR₁R₂, morpholino, piperidino or azepano, R₁ being unsubstituted or hydroxy- or carboxy-substituted C₁-C₄alkyl, and R₂ being unsubstituted or hydroxy-, sulfo-, carboxy- or phenyl-substituted C₁-C₄alkyl or phenyl,
W is -NR₃- or -O-, R₃ being hydrogen or C₁-C₄alkyl,
A and B are each independently of the other a cycloaliphatic or aromatic bridge member,
Q₁ and Q₂ are each independently of the other an anthraquinone radical, and
z is an integer 2, 3 or 4,
together with at least one red-dyeing dye of formula 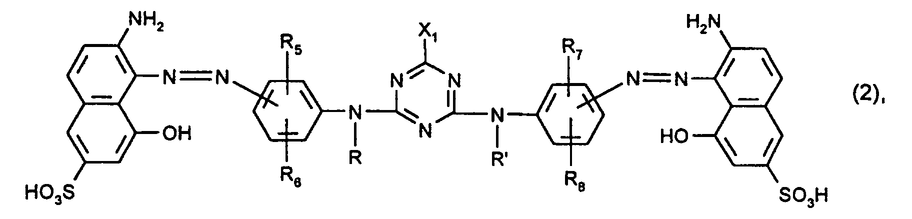 wherein
R and R' are each independently of the other hydrogen or unsubstituted or substituted C₁-C₄-alkyl,
R₅, R₆, R₇ and R₈ are each independently of the others hydrogen, C₁-C₄alkyl, C₁-C₄alkoxy, C₂-C₄alkanoylamino, ureido, halogen or sulfo, and
X₁ is halogen, hydroxy, C₁-C₄alkoxy, S-C₁-C₄alkyl, -NHR₁, -NR₁R₂, morpholino, piperidino or azepano, R₁ being unsubstituted or hydroxy- or carboxy-substituted C₁-C₄alkyl, and R₂ being unsubstituted or hydroxy-, sulfo-, carboxy- or phenyl-substituted C₁-C₄alkyl or phenyl,
and together with at least one yellow- or orange-dyeing dye of formula 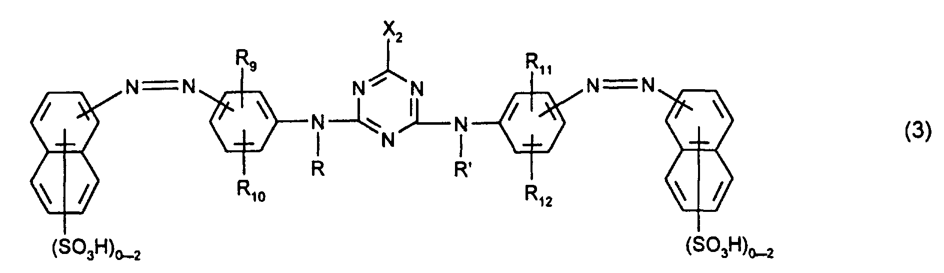 or of formula 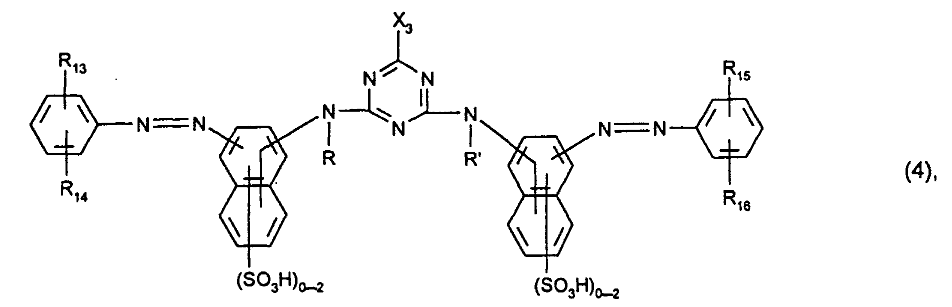 wherein
R and R' are each independently of the other hydrogen or unsubstituted or substituted C₁-C₄-alkyl,
X₂ and X₃ are each independently of the other halogen, hydroxy, C₁-C₄alkoxy, S-C₁-C₄alkyl, -NHR₁, -NR₁R₂, morpholino, piperidino or azepano, R₁ being unsubstituted or hydroxy- or carboxy-substituted C₁-C₄alkyl, and R₂ being unsubstituted or hydroxy-, sulfo-, carboxy- or phenyl-substituted C₁-C₄alkyl or phenyl, and
R₉, R₁₀, R₁₁, R₁₂, R₁₃, R₁₄, R₁₅ and R₁₆ are each independently of the others hydrogen, C₁-C₄-alkyl, C₁-C₄alkoxy, ureido, halogen, sulfo, or C₂-C₄alkanoylamino or C₁-C₄alkoxycarbonylamino each of which is unsubstituted or substituted in the alkyl moiety.

2. A method according to claim 1, which comprises using at least one blue-dyeing dye of formula 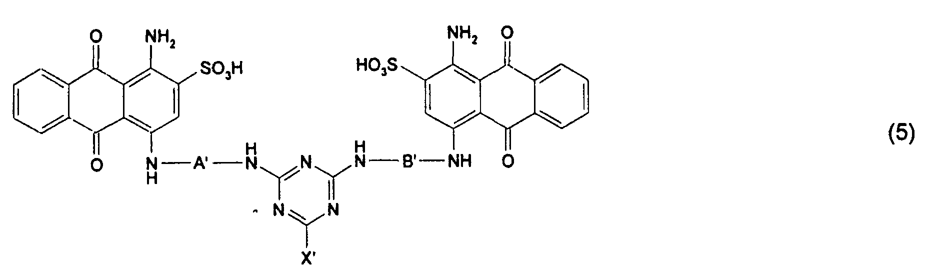 wherein
X' is -Cl, -OH, -N(CH₂CH₂OH)₂, -N(CH₃)(CH₂CH₂SO₃H), -NHCH₂COOH,
-N(CH₂CH₂CH₂CH₃)₂, 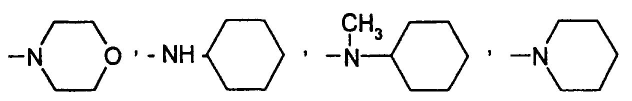 or 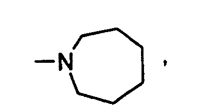 A' is a cyclohexylene or phenylene radical and
B' is a cyclohexylene or phenylene radical.

3. Dye of formula

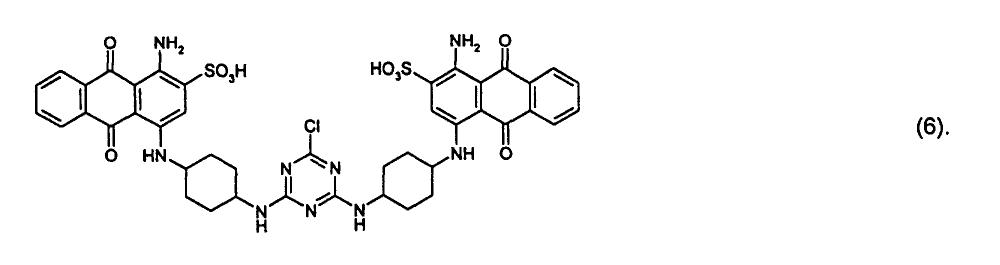

4. Dye of formula

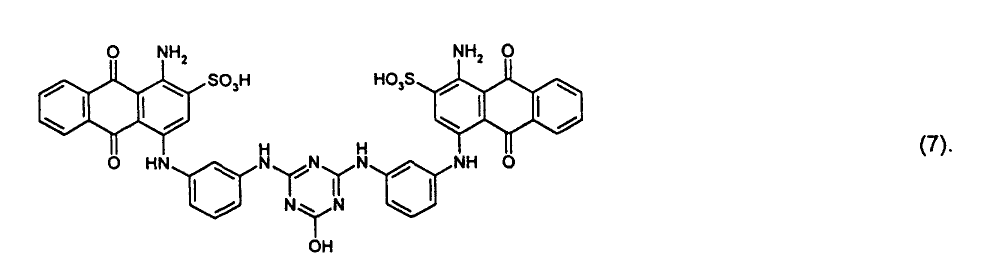

5. A process for the preparation of the dye of formula (6) according to claim 3, which comprises condensing cyanuric chloride with an amine of formula

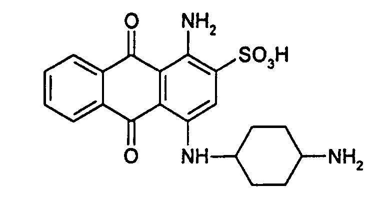

6. A process for the preparation of the dye of formula (7) according to claim 4, which comprises condensing cyanuric chloride with an amine of formula 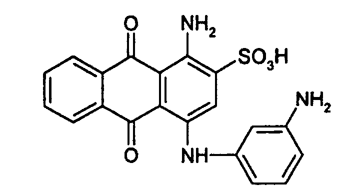 and hydrolysing the resulting product.

7. A method according to either claim 1 or claim 2, which comprises dyeing or printing wool or synthetic polyamide fibre materials.

8. A method according to claim 7, which comprises dyeing or printing synthetic polyamide fibre materials.

9. The use of the dyes of formulae (1), (2) and (3) or (4) according to claim 1 for the trichromatic dyeing or printing of natural or synthetic polyamide fibre materials.

10. Natural or synthetic polyamide fibre material dyed or printed using the dyes of formulae (1), (2) and (3) or (4) according to claim 1.

11. A dye mixture which comprises at least one blue-dyeing dye of formula 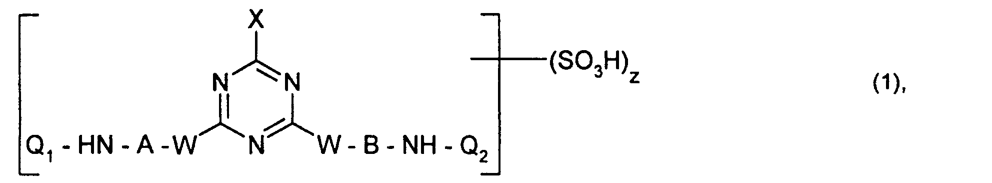 wherein
X is halogen, hydroxy, C₁-C₄alkoxy, S-C₁-C₄alkyl, -NHR₁, -NR₁R₂, morpholino, piperidino or azepano, R₁ being unsubstituted or hydroxy- or carboxy-substituted C₁-C₄alkyl, and R₂ being unsubstituted or hydroxy-, sulfo-, carboxy- or phenyl-substituted C₁-C₄alkyl or phenyl,
W is -NR₃- or -O-, R₃ being hydrogen or C₁-C₄alkyl,
A and B are each independently of the other a cycloaliphatic or aromatic bridge member,
Q₁ and Q₂ are each independently of the other an anthraquinone radical, and
z is an integer 2, 3 or 4,
at least one red-dyeing dye of formula 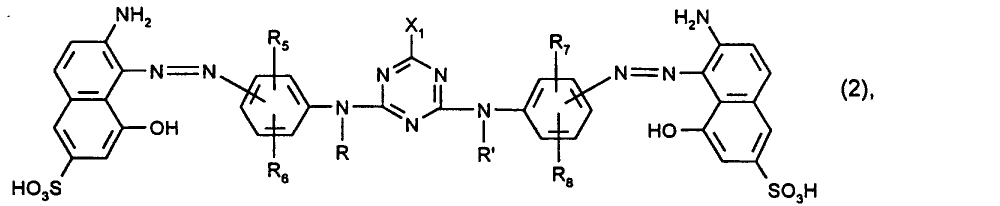 wherein
R and R' are each independently of the other hydrogen or unsubstituted or substituted C₁-C₄-alkyl,
R₅, R₆, R₇ and R₈ are each independently of the others hydrogen, C₁-C₄alkyl, C₁-C₄alkoxy, C₂-C₄alkanoylamino, ureido, halogen or sulfo, and
X₁ is halogen, hydroxy, C₁-C₄alkoxy, S-C₁-C₄alkyl, -NHR₁, -NR₁R₂, morpholino, piperidino or azepano, R₁ being unsubstituted or hydroxy- or carboxy-substituted C₁-C₄alkyl, and R₂ being unsubstituted or hydroxy-, sulfo-, carboxy- or phenyl-substituted C₁-C₄alkyl or phenyl,
and at least one yellow- or orange-dyeing dye of formula 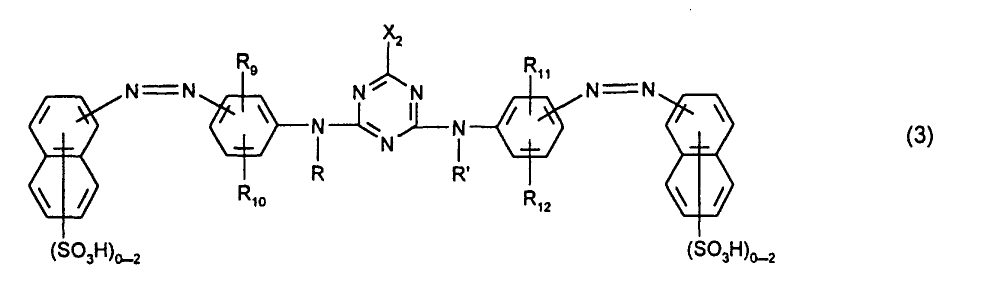 or of formula 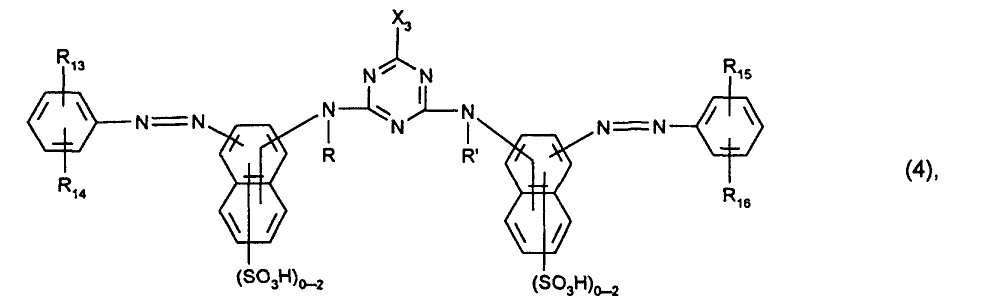 wherein
R and R' are each independently of the other hydrogen or unsubstituted or substituted C₁-C₄-alkyl,
X₂ and X₃ are each independently of the other halogen, hydroxy, C₁-C₄alkoxy, S-C₁-C₄alkyl, -NHR₁, -NR₁R₂, morpholino, piperidino or azepano, R₁ being unsubstituted or hydroxy- or carboxy-substituted C₁-C₄alkyl, and R₂ being unsubstituted or hydroxy-, sulfo-, carboxy- or phenyl-substituted C₁-C₄alkyl or phenyl, and
R₉, R₁₀, R₁₁, R₁₂, R₁₃, R₁₄, R₁₅ and R₁₆ are each independently of the others hydrogen, C₁-C₄-alkyl, C₁-C₄alkoxy, ureido, halogen, sulfo, or C₂-C₄alkanoylamino or C₁-C₄alkoxycarbonylamino each of which is unsubstituted or substituted in the alkyl moiety.

## Revendications

1. Procédé pour la teinture ou l'impression en trichromie de fibres polyamides naturelles ou synthétiques, **caractérisé en ce qu'**on utilise au moins un colorant teignant en bleu de formule (1) 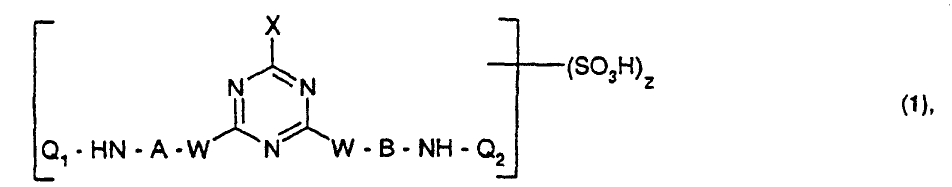 dans laquelle
X est halogène, hydroxy, alcoxy en C₁-C₄, S-alkyle en C₁-C₄, -NHR₁, -NR₁R₂, morpholino, pipéridino ou azépano, R₁ étant alkyle en C₁-C₄ non substitué ou substitué par hydroxy ou carboxy, et R₂ étant alkyle en C₁-C₄ non substitué ou substitué par hydroxy, sulfo, carboxy ou phényle, ou R₂ étant phényle,
les W sont -NR₃- ou -O-, R₃ étant hydrogène ou alkyle en C₁-C₄,
A et B sont, indépendamment l'un de l'autre, un chaînon formant pont cycloaliphatique ou aromatique,
Q₁ et Q₂ signifient, indépendamment l'un de l'autre, un radical anthraquinone, et z un nombre entier 2, 3 ou 4, conjointement avec au moins un colorant teignant en rouge de formule (2) 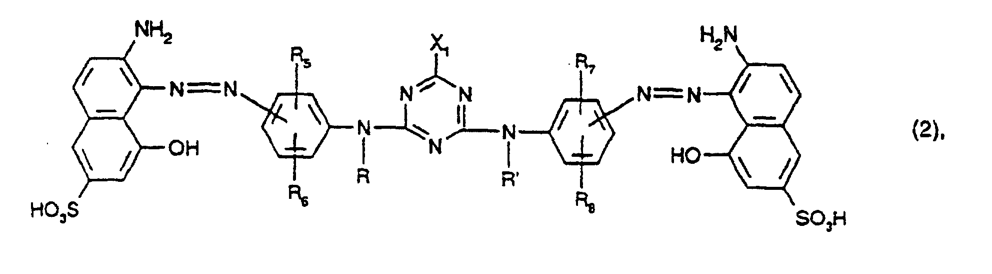 dans laquelle
R et R¹ sont, indépendamment l'un de l'autre, hydrogène ou alkyle en C₁-C₄, éventuellement substitué,
R₅, R₆, R₇ et R₈ sont, indépendamment l'un de l'autre, hydrogène, alkyle en C₁-C₄, alcoxy en C₁-C₄, alcanoylamino en C₂-C₄, ureido, halogène ou sulfo, et
X₁ est halogène, hydroxy, alcoxy en C₁-C₄, S-alkyle en C₁-C₄, -NHR₁, -NR₁R₂, morpholino, pipéridino ou azépano, R₁ étant alkyle en C₁-C₄ non substitué ou substitué par hydroxy ou carboxy, et R₂ étant alkyle en C₁-C₄ non substitué ou substitué par hydroxy, sulfo, carboxy ou phényle, ou R₂ étant phényle,
et utilisé conjointement avec au moins un colorant teignant en jaune ou en orange de formule (3) 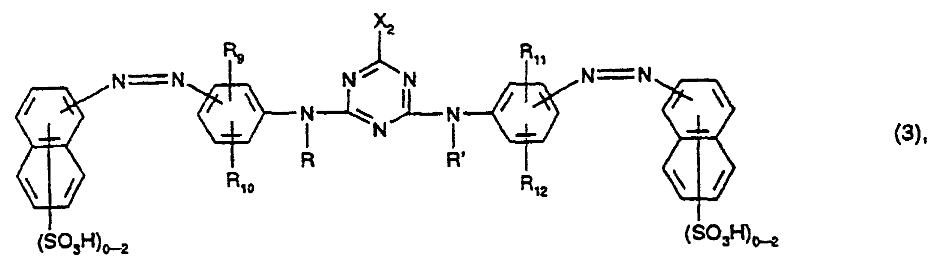 ou de formule (4) 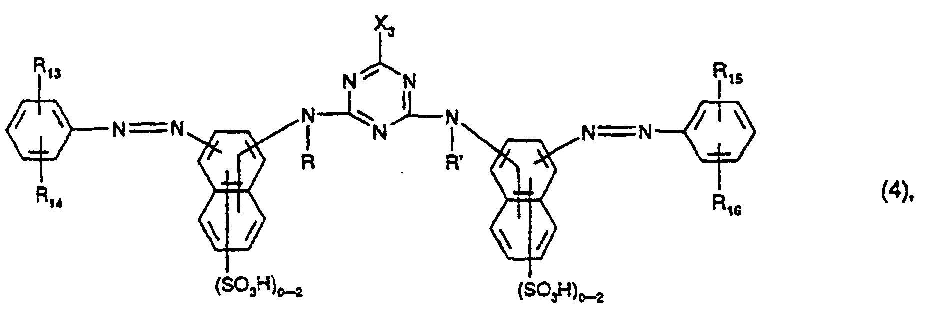 dans laquelle
R et R¹ sont, indépendamment l'un de l'autre, hydrogène ou alkyle en C₁-C₄ éventuellement substitué,
X₂ et X₃ sont, indépendamment l'un de l'autre, halogène, hydroxy, alcoxy en C₁-C₄, S-alkyle en C₁-C₄, -NHR₁, -NR₁R₂, morpholino, pipéridino ou azépano, R₁ étant alkyle en C₁-C₄ non substitué ou substitué par hydroxy ou carboxy, et R₂ étant alkyle en C₁-C₄ non substitué ou substitué par hydroxy, sulfo, carboxy ou phényle, ou R₂ étant phényle, et
R₉, R₁₀, R₁₁, R₁₂, R₁₃, R₁₄, R₁₅ et R₁₆ signifiant, indépendamment l'un de l'autre, hydrogène, alkyle en C₁-C₄, alcoxy en C₁-C₄, ureido, halogène, sulfo ou alcanoylamino en C₂-C₄ éventuellement substitué dans la partie alkyle ou alcoxycarbonylamino en C₁-C₄.

2. Procédé selon la revendication 1, **caractérisé en ce qu'**on utilise au moins un colorant teignant en bleu de formule (5) 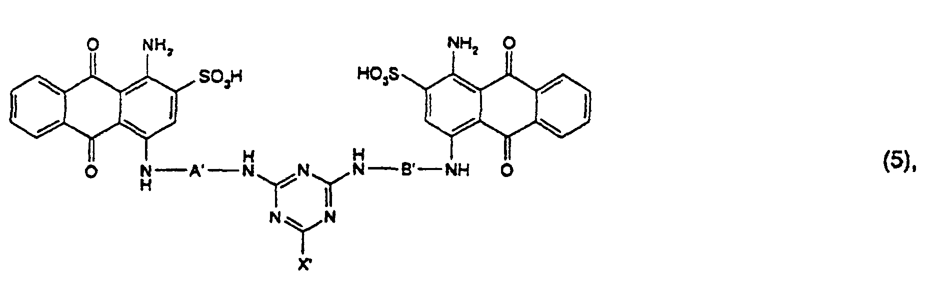 dans laquelle
X'signifie -Cl, -OH, -N(CH₂CH₂OH)₂, -N(CH₃)(CH₂CH₂SO₃H), -NHCH₂COOH, -N(CH₂CH₂CH₂CH₃)₂, 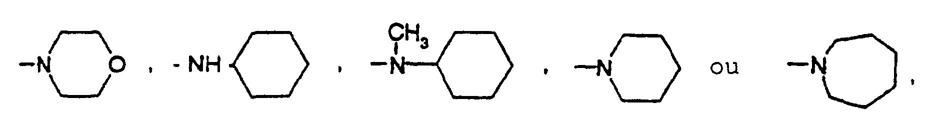 A' représente un radical cyclohexylène ou phénylène et B' représente un radical cyclohexylène ou phénylène.

3. Colorant de formule (6)

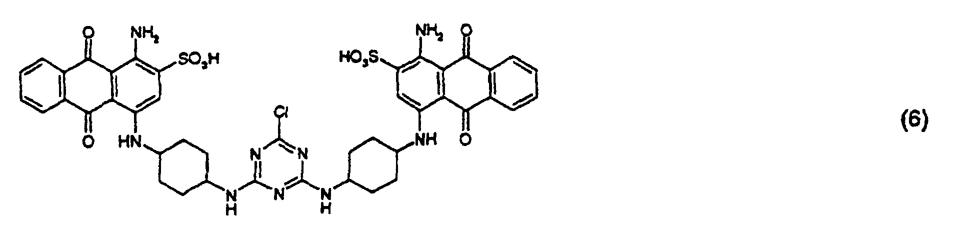

4. Colorant de formule (7)

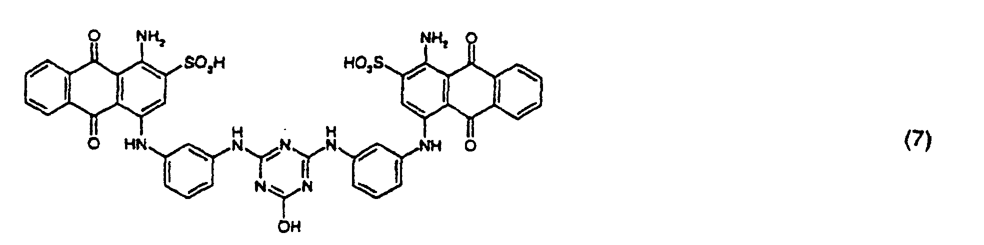

5. Procédé de préparation du colorant de formule (6) selon la revendication 3, **caractérisé en ce qu'**on condense du chlorure de cyanure avec une amine de formule

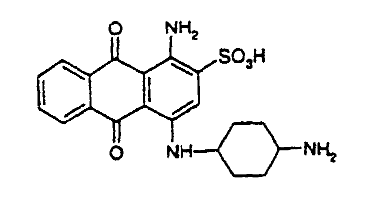

6. Procédé de préparation du colorant de formule (7) selon la revendication 4, **caractérisé en ce que** l'on condense du chlorure de cyanure avec une amine de formule 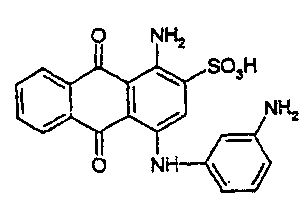 et que l'on hydrolyse le produit obtenu.

7. Procédé selon l'une des revendications 1 et 2, **caractérisé en ce que** l'on teint ou imprime de la laine ou des fibres polyamides synthétiques.

8. Procédé selon la revendication 7, **caractérisé en ce que** l'on teint ou imprime des fibres polyamides synthétiques.

9. Utilisation des colorants de formules (1), (2) et (3) ou (4) selon la revendication 1 pour la teinture ou l'impression en trichromie de fibres polyamides naturelles ou synthétiques.

10. Fibres polyamides naturelles ou synthétiques teintées ou imprimées avec les colorants de formules (1), (2) et (3) ou (4) selon la revendication 1.

11. Mélange de colorants contenant au moins un colorant teignant en bleu de formule (1) 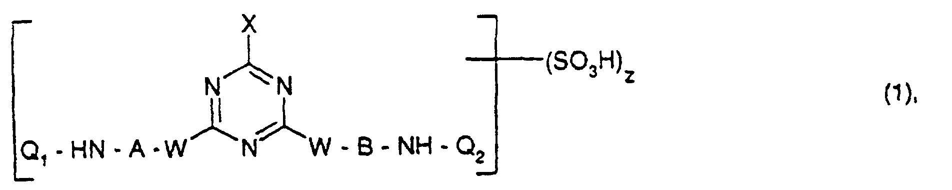 dans laquelle
X est halogène, hydroxy, alcoxy en C₁-C₄, S-alkyle en C₁-C₄, -NHR₁, -NR₁R₂, morpholino, pipéridino ou azépano, R₁ étant alkyle en C₁-C₄ non substitué ou substitué par hydroxy ou carboxy, et R₂ étant alkyle en C₁-C₄ non substitué ou substitué par hydroxy, sulfo, carboxy ou phényle, ou R₂ étant phényle,
les W sont -NR₃- ou -O-, R₃ étant hydrogène ou alkyle en C₁-C₄,
A et B sont, indépendamment l'un de l'autre, un chaînon formant pont cycloaliphatique ou aromatique,
Q₁ et Q₂ signifient, indépendamment l'un de l'autre, un radical anthraquinone, et z un nombre entier 2, 3 ou 4,
au moins un colorant teignant en rouge de formule 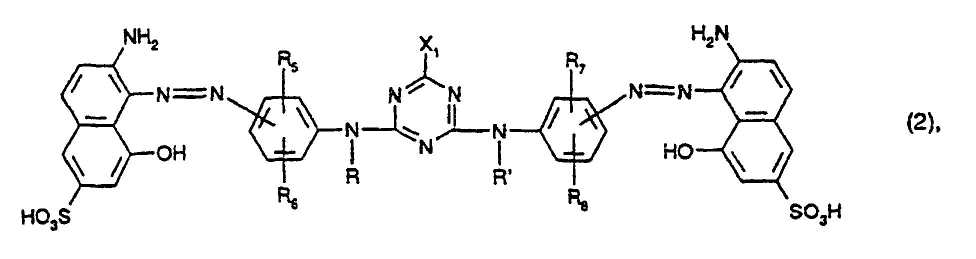 dans laquelle
R et R¹ sont, indépendamment l'un de l'autre, hydrogène ou alkyle en C₁-C₄, éventuellement substitué,
R₅, R₆, R₇ et R₈ sont, indépendamment l'un de l'autre, hydrogène, alkyle en C₁-C₄, alcoxy en C₁-C₄, alcanoylamino en C₂-C₄, ureido, halogène ou sulfo, et
X₁ est halogène, hydroxy, alcoxy en C₁-C₄, S-alkyle en C₁-C₄, -NHR₁, -NR₁R₂, morpholino, pipéridino ou azépano, R₁ étant alkyle en C₁-C₄ non substitué ou substitué par hydroxy ou carboxy, et R₂ étant alkyle en C₁-C₄ non substitué ou substitué par hydroxy, sulfo, carboxy ou phényle, ou R₂ étant phényle,
et au moins un colorant teignant en jaune ou en orange de formule (3) 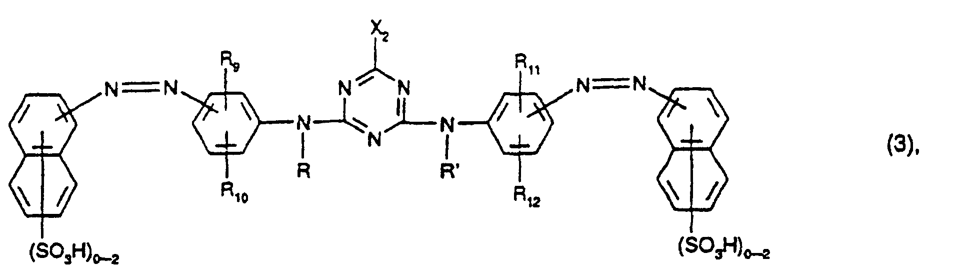 ou de formule (4) 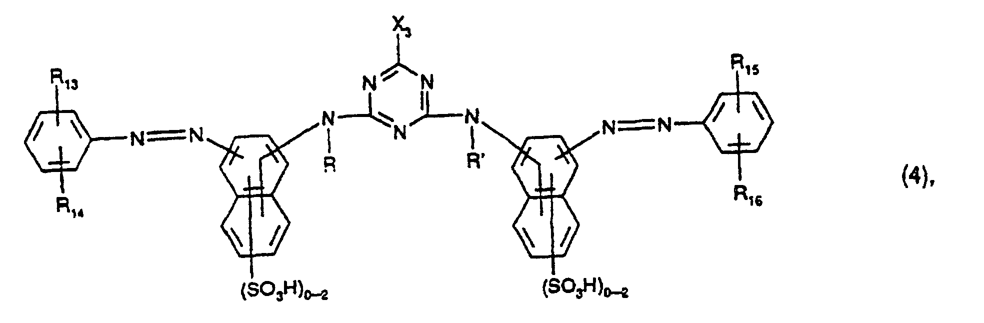 dans laquelle
R et R' sont, indépendamment l'un de l'autre, hydrogène ou alkyle en C₁-C₄ éventuellement substitué,
X₂ et X₃ sont, indépendamment l'un de l'autre, halogène, hydroxy, alcoxy en C₁-C₄, S-alkyle en C₁-C₄, -NHR₁, -NR₁R₂, morpholino, pipéridino ou azépano, R₁ étant alkyle en C₁-C₄ non substitué ou substitué par hydroxy ou carboxy, et R₂ étant alkyle en C₁-C₄ non substitué ou substitué par hydroxy, sulfo, carboxy ou phényle, ou R₂ étant phényle, et
R₉, R₁₀, R₁₁, R₁₂, R₁₃, R₁₄, R₁₅ et R₁₆ signifiant, indépendamment l'un de l'autre, hydrogène, alkyle en C₁-C₄, alcoxy en C₁-C₄, ureido, halogène, sulfo ou alcanoylamino en C₂-C₄ éventuellement substitué dans la partie alkyle ou alcoxycarbonylamino en C₁-C₄.
